# EUROPEAN PATENT APPLICATION

(11) **EP 4 561 208 A1**
(43) Date of publication of application: **28.05.2025**
(21) Application number: 23854494.4
(22) Date of filing: 17.08.2023
(51) Int. Cl.: H04W 68/00

(54) **DATA TRANSMISSION METHOD, APPARATUS AND SYSTEM, AND TERMINAL AND NETWORK DEVICE**

(30) Priority: 17.08.2022 CN 202210986742
(71) Applicant: China Telecom Corporation Limited, Beijing 100033 (CN)
(72) Inventor: XIN, Jincan, Beijing 100033 (CN); XU, Sen, Beijing 100033 (CN); XIONG, Shangkun, Beijing 100033 (CN); ZHANG, Hua, Beijing 100033 (CN)
(74) Representative: Reddie & Grose LLP
(86) International application number: PCT/CN2023/113564
(87) International publication number: WO 2024/037595

(57) **Abstract**

Provided in the embodiments of the present disclosure are a data transmission method, apparatus and system, and a terminal and a network device. The solution is as follows: when the current state of a target terminal is an inactive state, receiving, according to a first time period, a paging message, which is issued by a target network device; when the received paging message comprises a specified paging record of the target terminal, sending a connection recovery request to the target network device, such that the target network device sends a downlink small data packet to the target terminal on the basis of the received connection recovery request, wherein the specified paging record comprises a downlink small data transmission in the inactive state indication, and the connection recovery reason in the connection recovery request is the downlink small data transmission in the inactive state; and receiving the downlink small data packet, which is sent by the target network device. By means of the technical solution in the embodiments of the present disclosure, downlink data transmission of a terminal in an inactive state can be implemented, and the signaling overhead and time delay consumption of a data transmission process are reduced.

## Description

### CROSS-REFERENCE TO RELATED APPLICATIONS

The present disclosure is based on and claims priority to China Patent Application No. 202210986742.0 filed on August 17, 2022, the disclosure of which is incorporated by reference herein in its entirety.

### TECHNICAL FIELD

The present disclosure relates to the field of wireless communication technology, in particular to a data transmission method, apparatus and system, a terminal and a network device.

### BACKGROUND

In the related art, in order to allow User Equipment (UE) to rapidly enter a connected state (RRC_CONNECTED state) for data interaction and reduce signaling overhead brought by the movement process and the state transition process of UE at the same time, a new state, that is, an inactive state (i.e., RRC_INACTIVE state), is introduced. In the RRC_INACTIVE state, the Non-access Stratum (NAS) of UE remains in the connected state, but the air interface connection corresponding to the Access Stratum (AS) of UE is temporarily suspended, that is, similar to an idle state (i.e., RRC_IDLE state).

### SUMMARY

An object of the embodiments of the present disclosure is to provide a data transmission method, apparatus and system, a terminal and a network device, so as to realize downlink data transmission of the terminal in the inactive state and reduce signaling overhead and time delay consumption during data transmission process. The specific technical solutions are as follows.

The embodiments of the present disclosure provide a data transmission method applied to a target terminal. The method comprises: receiving a paging message issued by a target network device according to a first time period when a current state of the target terminal is an inactive state; sending a connection resume request to the target network device when the paging message received comprises a specified paging record of the target terminal, such that the target network device sends a downlink small data packet to the target terminal based on the connection resume request received, wherein the specified paging record comprises a mobile terminated small data transmission indication, and a connection resume reason in the connection resume request is mobile terminated small data transmission; and receiving the downlink small data packet sent by the target network device.

The embodiments of the present disclosure also provide a data transmission method applied to a target network device. The method comprises: issuing a paging message to a target terminal according to a second time period, the target terminal being in a current state which is an inactive state; receiving a connection resume request sent by the target terminal, wherein the connection resume request is sent by the target terminal when receiving the paging message comprising a specified paging record of the target terminal itself, the specified paging record comprises a mobile terminated small data transmission indication, and a connection resume reason in the connection resume request is mobile terminated small data transmission; and sending a downlink small data packet to the target terminal based on the connection resume request, such that the target terminal receives the downlink small data packet.

The embodiments of the present disclosure also provide a data transmission apparatus applied to a target terminal. The apparatus comprises: a first receiving module for receiving a paging message issued by a target network device according to a first time period when a current state of the target terminal is an inactive state; a first sending module for sending a connection resume request to the target network device when the paging message received comprises a specified paging record of the target terminal, such that the target network device sends a downlink small data packet to the target terminal based on the connection resume request received, wherein the specified paging record comprises a mobile terminated small data transmission indication, and a connection resume reason in the connection resume request is mobile terminated small data transmission; and a second receiving module for receiving the downlink small data packet sent by the target network device.

In some embodiments, the paging message comprises a paging record list which is a list for recording a terminal that is paged, the paging record list comprising at least one paging record.

In some embodiments, the paging record comprises at least one of a terminal identity of the terminal that is paged, an access type or the mobile terminated small data transmission indication, wherein: the terminal identity comprises a non-access stratum (NAS) identity (ID) for core network paging assigned by NAS to the terminal, and a complete inactive state terminal identity for radio access network (RAN) paging; the access type is used to indicate whether the paging message is a paging message initiated by a protocol data unit (PDU) session that is not accessed by a 3rd generation partnership project (3GPP); and the mobile terminated small data transmission indication is used to indicate that the paging message is used to trigger mobile terminated small data transmission.

In some embodiments, the paging record further comprises a contention free access preamble indicating the terminal to initiate contention free random access.

In some embodiments, the data transmission apparatus further comprises: a parsing module for parsing each paging record in the paging message received after receiving the paging message issued by the target network device according to the first time period; a first determining module for determining, for each paging record obtained by parsing, that this paging record is the specified paging record of the target terminal, if the complete inactive state terminal identity in this paging record matches with a complete inactive state terminal identity stored by the target terminal, and this paging record comprises the mobile terminated small data transmission indication; and a second determining module for determining that this paging record is not the specified paging record of the target terminal, if the complete inactive state terminal identity in this paging record does not match with the complete inactive state terminal identity stored by the terminal, and/or this paging record does not comprise the mobile terminated small data transmission indication.

In some embodiments, the first sending module is specifically used for, if the target terminal stores a configured grant (CG) configuration information, sending the connection resume request to the target network device based on the CG configuration information when the paging message received comprises the specified paging record of the target terminal.

In some embodiments, the first sending module is specifically used for, if the target terminal does not store a configured grant (CG) configuration information, sending the connection resume request to the target network device in a contention access manner when the paging message received comprises the specified paging record of the target terminal, and the specified paging record does not comprise a contention free access preamble; and sending the connection resume request to the target network device in a contention free access manner when the paging message received comprises the specified paging record of the target terminal and the specified paging record comprises the contention free access preamble.

In some embodiments, the data transmission apparatus further comprises: a judging module for judging whether the target terminal satisfies a preset connection initiating condition at a current moment before sending the connection resume request to the target network device, wherein the preset connection initiating condition is that the mobile terminated small data transmission indication is received, or the preset connection initiating condition is that the mobile terminated small data transmission indication is received, and a downlink reference signal receiving power (RSRP) is greater than a preset threshold; and a performing module for performing the step of sending the connection resume request to the target network device when the target terminal satisfies the preset connection initiating condition.

In some embodiments, the data transmission apparatus further comprises: a performing module for sending another connection resume request in a case where another preset connection initiating condition is satisfied, such that the target terminal sends an uplink data packet to the target network device after a connection corresponding to the another connection resume request is resumed, wherein the another preset connection initiating condition is that data amount of radio bearer configured for mobile originated small data transmission is less than a preset data amount threshold, or the another preset connection initiating condition is that the data amount of the radio bearer configured for mobile originated small data transmission is less than the preset data amount threshold and uplink small data transmission resource is effective.

In some embodiments, the preset connection initiating condition is expressed as: the mobile terminated small data transmission indication is received; or the mobile terminated small data transmission indication is received, and a lower layer below a RRC layer indicates that triggering condition of small data transmission is satisfied.

In some embodiments, the another preset connection initiating condition is expressed as: an upper layer above a radio resource control (RRC) layer requires resuming RRC connection, SIB1 contains common configuration of small data transmission, small data transmission configuration is configured, all the uplink small data is mapped to radio bearers of the small data transmission configuration, and a lower layer below the RRC layer indicates that triggering condition of small data transmission is satisfied.

In some embodiments, the data transmission apparatus further comprises: a first starting module for starting a timer for detecting resume process of small data transmission in the inactive state when the target terminal satisfies the preset connection initiating condition; and a second starting module for starting a timer for monitoring resume process of inactive state and sending a timeout indication to MAC entity when the target terminal does not satisfy the preset connection initiating condition, wherein the timeout indication is used to indicate timeout of a configured grant (CG) timing advance timer in a CG configuration information of small data transmission.

In some embodiments, the data transmission apparatus further comprises: a release module for releasing a configured grant (CG) configuration information that is stored if the target terminal moves from a current radio access network (RAN) cell to other RAN cells and initiates a connection resume process in the other RAN cells.

In some embodiments, the connection resume request is a first connection resume request or a second connection resume request, and the first sending module is specifically used for: selecting the first connection resume request as the connection resume request when a SIB1 sent by a base station indicates that the connection resume request uses a full resume identifier, or selecting the second connection resume request as the connection resume request when the SIB1 received does not indicate use of the full resume identifier; resuming a preset security information from an access layer context information that is stored, wherein the preset security information comprises: a radio resource control (RRC) configuration, a robust header compression (ROHC) state, a stored mapping relationship between quality of service (QoS) flow and data resource bearer (DRB), a base station root key and an integrity protection key; reconstructing a packet data convergence protocol (PDCP) entity for the SIB1; resuming the SIB1; for each radio bearer configured for mobile terminated small data transmission, resuming a configuration associated with a primary cell group and radio link layer control protocol (RLC) bearer of PDCP configuration from the access layer context information, and reconstructing a PDCP entity for this radio bearer; resuming all the radio bearers configured for mobile terminated small data transmission; and sending the connection resume request to the target network device.

In some embodiments, the first connection resume request and the second connection resume request each comprises: a resume identifier, a resume integrity check code, and the connection resume reason, wherein: the resume identifier of the first connection resume request is a complete inactive state terminal identity stored by the target terminal, and the resume identifier of the second connection request is a truncated inactive state terminal identity stored by the target terminal, the complete inactive state terminal identity and the truncated inactive state terminal identity are wireless network temporary identifier values of a terminal in the inactive state, and used for a target network side to find an anchor point before the terminal enters the inactive state and the access layer context information stored by the anchor point, and the complete inactive state terminal identity and the truncated inactive state terminal identity have different sizes; and the resume integrity check code is an identity authentication token for terminal identity authentication at the base station.

In some embodiments, the data transmission apparatus further comprises: a third receiving module for receiving a first release message issued by the target network device when the current state of the target terminal is a connected state, wherein the first release message comprises a suspension configuration information indicating a terminal to perform an inactive state configuration; and a first switching module for switching the current state to the inactive state based on the suspension configuration information.

In some embodiments, the suspension configuration information comprises a complete inactive state terminal identity, a truncated inactive state terminal identity, a radio paging cycle, a radio notification area information, a timer, a next hop chaining count value and a configuration information of mobile terminated small data transmission.

In some embodiments, the complete inactive state terminal identity and the truncated inactive state terminal identity are wireless network temporary identifier values of a terminal in the inactive state, and are used for a target network side to find an anchor point node before the terminal enters the inactive state and an access layer context information stored by the anchor point node, and the complete inactive state terminal identity and the truncated inactive state terminal identity have different sizes; the radio paging cycle is a RAN paging cycle configured by a radio access network (RAN) side node for the terminal in the inactive state; the radio notification area information comprises a cell list and a radio area configuration list, wherein the cell list is a list of cells configured in RAN area, and the radio area configuration list comprises a RAN area code or a random access (RA) code of the RAN area; the timer is used to trigger a periodic RAN-based notification area update (RNAU) process in the terminal; the next hop chaining count value is used to calculate a security key after connection is resumed; and the configuration information of mobile terminated small data transmission comprises at least one of a data resource bearer (DRB) list of small data transmission or a signaling radio bearer 2 (SRB2) indication of small data transmission, wherein the DRB list of small data transmission indicates a DRB identifier of small data transmission configuration, and the SRB2 indication of small data transmission indicates presence or absence of SRB2 of small data transmission configuration of the terminal.

In some embodiments, the configuration information of mobile terminated small data transmission further comprises a configured grant (CG) configuration information, wherein the CG configuration grant information comprises a CG SSB RSRP threshold, a CG timing advance timer, a CG timing advance verification configuration and a CG RSRP variation threshold, wherein: the CG SSB RSRP threshold is a reference signal receiving power (RSRP) threshold selected by SSB performing small data transmission based on CG resource; the CG timing advance timer is used for timing synchronization of small data transmission; the CG timing advance verification configuration is used for a configuration of timing advance (TA) verification based on RSRP; and the CG RSRP variation threshold is a RSRP threshold for TA verification of small data transmission.

In some embodiments, the first switching module is specifically used for: resetting media access control (MAC) and releasing a default MAC cell group configuration; applying the suspension configuration information; determining each DRB in a DRB list of small data transmission in the inactive state and a SRB2 indication of small data transmission as DRB and SRB2 during process of small data transmission when the suspension configuration information comprises a CG configuration information, reconstructing a RLC entity for each radio link layer control protocol (RLC) bearer in target terminal configuration, triggering a packet data convergence protocol (PDCP) entity to perform a session data unit (SDU) discarding process for resumed SRB2 and SRB1, configuring CG resource of small data transmission for a MAC entity, and indicating to start a CG timing advance timer; storing a current access layer root key (KgNB) and an integrity protection key (KRRCint) of radio resource control (RRC) signaling, a robust header compression (ROHC) state, a stored mapping rule between quality of service (QoS) flow and data resource bearer (DRB), a cell wireless network temporary identifier (C-RNTI) used in a source primary cell (PCell), a cell identifier and a physical cell identifier of the source PCell, a special cell (SpCell) common configuration in a synchronous reconfiguration message of a new radio primary secondary cell (NR PSCell), and all the other configuration parameters than parameters in a synchronization reconfiguration message of the PCell, parameters in the synchronization reconfiguration message of the NR PSCell, mobility control information of a secondary cell group (SCG) of E-UTRA PSCell, a primary secondary cell (PSCell) configuration in EN-DC and a service cell common configuration SIB in an access layer context information of a terminal in the inactive state; suspending all SRBs except SRB0 and DRBs; indicating a lower layer of all DRBs to perform PDCP suspension, wherein the lower layer is below a RRC layer; and switching to the inactive state and performing cell reselection.

In some embodiments, the data transmission apparatus further comprises: a fourth receiving module for receiving a system message broadcast by the target network device, wherein the system message comprises at least one of a downlink transmission frequency information, an initial downlink bandwidth part (BWP), a broadcast control channel (BCCH) configuration information, or a paging channel (PCCH) configuration information.

In some embodiments, the downlink transmission frequency information is used to indicate a transmission frequency of the downlink small data packet; the initial downlink BWP is an initial downlink BWP configuration of a primary cell; the BCCH configuration information is a configuration related to modifying a passing cycle of the system message; and the PDCCH configuration information comprises a default paging cycle, a paging frame number and configuration, a number of paging occasions and a first physical downlink control channel (PDCCH) monitoring occasion, wherein the default paging cycle is a default paging cycle broadcast in the system message, the paging frame number and configuration is used to derive a total number of paging frames and a paging frame offset, the number of paging occasions is used to indicate a number of paging occasions in each paging frame, the paging occasions are a group of PDCCH monitoring occasions consisting of a plurality of time slots for sending a paging control information, and the first PDCCH monitoring occasion is a first PDCCH monitoring occasion for indicating to monitor a paging occasion of a paging frame.

In some embodiments, the data transmission apparatus further comprises: a third determining module for determining a smaller value of a radio paging cycle and the default paging cycle as the first time period for receiving the paging message when the target terminal is in the inactive state, wherein the radio paging cycle is a RAN paging cycle configured by a wireless access network (RAN) side node for a terminal in the inactive state.

In some embodiments, the connection resume request further comprises an uplink small data packet; and the second receiving module is specifically used for receiving the downlink small data packet sent by the target network device and a feedback information sent by the target network device for the uplink small data packet.

In some embodiments, the data transmission apparatus further comprises: a fifth receiving module for receiving a second release message sent by the target network device when transmission of the downlink small data packet is completed, wherein the second release message comprises an indication information indicating to switch state; and a second switching module for switching the current state to the inactive state or an idle state based on the indication information.

The embodiments of the present disclosure also provide a data transmission apparatus applied to a target network device. The data transmission apparatus comprises: a second sending module for issuing a paging message to a target terminal according to a second time period, the target terminal being in a current state which is an inactive state; a sixth receiving module for receiving a connection resume request sent by the target terminal, wherein the connection resume request is sent by the target terminal when receiving the paging message comprising a specified paging record of the target terminal itself, the specified paging record comprises a mobile terminated small data transmission indication, and a connection resume reason in the connection resume request is mobile terminated small data transmission; and a third sending module for sending a downlink small data packet to the target terminal based on the connection resume request, such that the target terminal receives the downlink small data packet.

In some embodiments, the paging message comprises a paging record list which is a list for recording a terminal that is paged, the paging record list comprising at least one paging record.

In some embodiments, the paging record comprises at least one of a terminal identity of the terminal that is paged, an access type or the mobile terminated small data transmission indication, wherein: the terminal identity comprises a non-access stratum (NAS) identity (ID) for core network paging assigned by NAS to the terminal, and a complete inactive state terminal identity for radio access network (RAN) paging; the access type is used to indicate whether the paging message is a paging message initiated by a protocol data unit (PDU) session that is not accessed by a 3rd generation partnership project (3GPP); and the mobile terminated small data transmission indication is used to indicate that the paging message is used to trigger mobile terminated small data transmission.

In some embodiments, the paging record further comprises a contention free access preamble indicating the terminal to initiate contention free random access.

In some embodiments, the connection resume request is a first connection resume request or a second connection resume request, the first connection resume request is sent by the target terminal when SIB1 sent by a base station indicates that the connection resume request uses a full resume identifier, and the second connection resume request is sent by the target terminal when the SIB1 sent by the base station does not indicate that the connection resume request uses a full resume identifier.

In some embodiments, the first connection resume request and the second connection resume request each comprises: a resume identifier, a resume integrity check code, and the connection resume reason, wherein: the resume identifier of the first connection resume request is a complete inactive state terminal identity stored by the target terminal, and the resume identifier of the second connection request is a truncated inactive state terminal identity stored by the target terminal, the complete inactive state terminal identity and the truncated inactive state terminal identity are wireless network temporary identifier values of a terminal in the inactive state, and used for a target network side to find an anchor point before the terminal enters the inactive state and the access layer context information stored by the anchor point, and the complete inactive state terminal identity and the truncated inactive state terminal identity have different sizes; and the resume integrity check code is an identity authentication token for terminal identity authentication at the base station.

In some embodiments, the data transmission apparatus further comprises: a fourth sending module for issuing a first release message to the terminal, wherein the first release message comprises a suspension configuration information indicating a terminal to perform an inactive state configuration, such that the target terminal switches the current state to the inactive state based on the suspension configuration information.

In some embodiments, the suspension configuration information comprises a complete inactive state terminal identity, a truncated inactive state terminal identity, a radio paging cycle, a radio notification area information, a timer, a next hop chaining count value and a configuration information of mobile terminated small data transmission.

In some embodiments, the complete inactive state terminal identity and the truncated inactive state terminal identity are wireless network temporary identifier values of a terminal in the inactive state, and are used for a target network side to find an anchor point node before the terminal enters the inactive state and an access layer context information stored by the anchor point node, and the complete inactive state terminal identity and the truncated inactive state terminal identity have different sizes; the radio paging cycle is a RAN paging cycle configured by a radio access network (RAN) side node for the terminal in the inactive state; the radio notification area information comprises a cell list and a radio area configuration list, wherein the cell list is a list of cells configured in RAN area, and the radio area configuration list comprises a RAN area code or a random access (RA) code of the RAN area; the timer is used to trigger a periodic RAN-based notification area update (RNAU) process in the terminal; the next hop chaining count value is used to calculate a security key after connection is resumed; and the configuration information of mobile terminated small data transmission comprises at least one of a data resource bearer (DRB) list of small data transmission in the inactive state or a signaling radio bearer 2 (SRB2) indication of small data transmission, wherein the DRB list of small data transmission in the inactive state indicates a DRB identifier of small data transmission configuration, and the SRB2 indication of small data transmission indicates presence or absence of SRB2 of small data transmission configuration of the terminal.

In some embodiments, the configuration information of mobile terminated small data transmission further comprises a configured grant (CG) configuration information, wherein the CG configuration grant information comprises a CG SSB RSRP threshold, a CG timing advance timer, a CG timing advance verification configuration and a CG RSRP variation threshold, wherein: the CG SSB RSRP threshold is a reference signal receiving power (RSRP) threshold selected by SSB performing small data transmission based on CG resource; the CG timing advance timer is used for timing synchronization of small data transmission; the CG timing advance verification configuration is used for a configuration of timing advance (TA) verification based on RSRP; and the CG RSRP variation threshold is a RSRP threshold for TA verification of small data transmission.

In some embodiments, the data transmission apparatus further comprises: a broadcast module for broadcasting a system message, wherein the system message comprises at least one of a downlink transmission frequency information, an initial downlink bandwidth part (BWP), a broadcast control channel (BCCH) configuration information, or a paging channel (PCCH) configuration information.

In some embodiments, the downlink transmission frequency information is used to indicate a transmission frequency of the downlink small data packet; the initial downlink BWP is an initial downlink BWP configuration of a primary cell; the BCCH configuration information is a configuration related to modifying a passing cycle of the system message; and the PDCCH configuration information comprises a default paging cycle, a paging frame number and configuration, a number of paging occasions and a first physical downlink control channel (PDCCH) monitoring occasion, wherein the default paging cycle is a default paging cycle broadcast in the system message, the paging frame number and configuration is used to derive a total number of paging frames and a paging frame offset, the number of paging occasions is used to indicate a number of paging occasions in each paging frame, the paging occasions are a group of PDCCH monitoring occasions consisting of a plurality of time slots for sending a paging control information, and the first PDCCH monitoring occasion is a first PDCCH monitoring occasion for indicating to monitor a paging occasion of a paging frame.

In some embodiments, the data transmission apparatus further comprises: a fourth determining module for determining the default paging cycle as the second time period for sending the paging message.

In some embodiments, the connection resume request further comprises an uplink small data packet, and the third sending module is specifically used for: generating a feedback information for the uplink small data packet and obtaining the downlink small data packet when receiving the connection resume request; and sending the downlink small data packet and the feedback information to the target terminal.

In some embodiments, the data transmission apparatus further comprises: a fifth sending module for sending a second release message to the target terminal when transmission of the downlink small data packet is completed, wherein the second release message comprises an indication information indicating to switch state, such that the target terminal switches the current state to the inactive state or an idle state based on the indication information.

The embodiments of the present disclosure also provide a data transmission system comprising a target terminal and a target network device. The target terminal is used for performing any of the above data transmission methods applied to a target terminal, and the target network device is used for performing any of the above data transmission methods applied to a target network device.

The embodiments of the present disclosure also provide a target terminal, comprising a processor, a communication interface, a memory, and a communication bus, wherein the processor, the communication interface and the memory communicate with each other via the communication bus. The memory is used for storing a computer program; and the processor is used for executing the computer program stored on the memory to implement any of the above data transmission method.

The embodiments of the present disclosure also provide a target network device, comprising a processor, a communication interface, a memory, and a communication bus, wherein the processor, the communication interface and the memory communicate with each other via the communication bus. The memory is used for storing a computer program; and the processor is used for executing the computer program stored on the memory to implement any of the above data transmission method.

The embodiments of the present disclosure also provide a computer-readable storage medium having a computer program stored thereon that, when executed by a processor, implements any of the above data transmission method.

The embodiments of the disclosure also provide a computer program product containing instructions that, when run on a computer, causes the computer to perform any of the above data transmission method.

The embodiments of the present disclosure have the following beneficial effects.

By way of the technical solutions provided in the embodiments of the present disclosure, when a target terminal is in the inactive state, if the target terminal receives a paging message comprising a specified paging record of the target terminal itself sent by the target network device, a connection resume request may be sent to the target network device, so as to trigger a small data transmission process between the target terminal and the target network device when the terminal is in the inactive state. At this time, the target network device may send a downlink small data packet to the target terminal based on the received connection resume request, and the target terminal will also receive the downlink small data packet, thereby realizing a downlink small data packet transmission process of a terminal in the inactive state.

Furthermore, compared with the related art in which the terminal in the inactive state has to switch to the connected state for data transmission, in the embodiments of the present disclosure, a new terminal access type, i.e. mobile terminated small data transmission, is introduced through a mobile terminated small data transmission indication in a specified paging record, such that the terminal may receive the downlink small data packet sent by the target network device when the terminal is in the inactive state. The signaling overhead and the delay consumption caused by switching from the inactive state to the connected state are avoided, the transmission efficiency of the downlink small data packet is improved, and the signaling overhead of the downlink small data packet is saved, which effectively reduces the signaling overhead and the delay consumption during the data transmission process.

Of course, it is not necessary to achieve all the advantages described above at the same time by implementing any product or method of the present disclosure.

### BRIEF DESCRIPTION OF THE DRAWINGS

In order to explain the technical solutions in the embodiments of the present disclosure or the prior art more explicitly, the accompanying drawings required to be used in the description of the embodiments or the prior art will be briefly introduced below. Obviously, the accompanying drawings described below are merely some of the embodiments of the present disclosure. For those of ordinary skill in the art, other embodiments may also be obtained according to these accompanying drawings.
Fig. 1 is a first schematic flowchart of a data transmission method provided by embodiments of the present disclosure;
Fig. 2 is a second schematic flowchart of a data transmission method provided by embodiments of the present disclosure;
Fig. 3 is a third schematic flowchart of a data transmission method provided by embodiments of the present disclosure;
Fig. 4 is a fourth schematic flowchart of a data transmission method provided by embodiments of the present disclosure;
Fig. 5 is a fifth schematic flowchart of a data transmission method provided by embodiments of the present disclosure;
Fig. 6 is a sixth schematic flowchart of a data transmission method provided by embodiments of the present disclosure;
Fig. 7 is a schematic flowchart of a connection resume request sending method provided by embodiments of the present disclosure;
Fig. 8 is a seventh schematic flowchart of a data transmission method provided by embodiments of the present disclosure;
Fig. 9 is an eighth schematic flowchart of a data transmission method provided by embodiments of the present disclosure;
Fig. 10 is a ninth schematic flowchart of a data transmission method provided by embodiments of the present disclosure;
Fig. 11 is a tenth schematic flowchart of a data transmission method provided by embodiments of the present disclosure;
Fig. 12 is an eleventh schematic flowchart of a data transmission method provided by embodiments of the present disclosure;
Fig. 13 is a twelfth schematic flowchart of a data transmission method provided by embodiments of the present disclosure;
Fig. 14 is a thirteenth schematic flowchart of a data transmission method provided by embodiments of the present disclosure;
Fig. 15 is a signaling diagram of process of data transmission in an inactive state provided by embodiments of the present disclosure;
Fig. 16 is a first schematic structural view showing a data transmission apparatus provided by embodiments of the present disclosure;
Fig. 17 is a second schematic structural view showing a data transmission apparatus provided by embodiments of the present disclosure;
Fig. 18 is a schematic structural view showing a data transmission system provided by embodiments of the present disclosure;
Fig. 19 is a schematic structural view showing a target terminal provided by embodiments of the present disclosure;
Fig. 20 is a schematic structural view showing a target network device provided by embodiments of the present disclosure.

### DETAILED DESCRIPTION

The technical solutions in the embodiments of the present disclosure will be explicitly and completely described below in conjunction with the accompanying drawings in the embodiments of the present disclosure. Apparently, the embodiments described are merely some of the embodiments of the present disclosure, rather than all the embodiments. Based on the embodiments of the present disclosure, all the other embodiments obtained by those of ordinary skill in the art on the basis of the present disclosure pertain to the protection scope of the present disclosure.

In the related art, if UE in RRC_INACTIVE state needs to transmit a small data packet, UE needs to first switch from RRC_INACTIVE state to RRC_CONNECTED state, that is, data is transmitted after connection is established at the control plane and the user plane of network side. During this process, more signaling overhead and time delay consumption are produced.

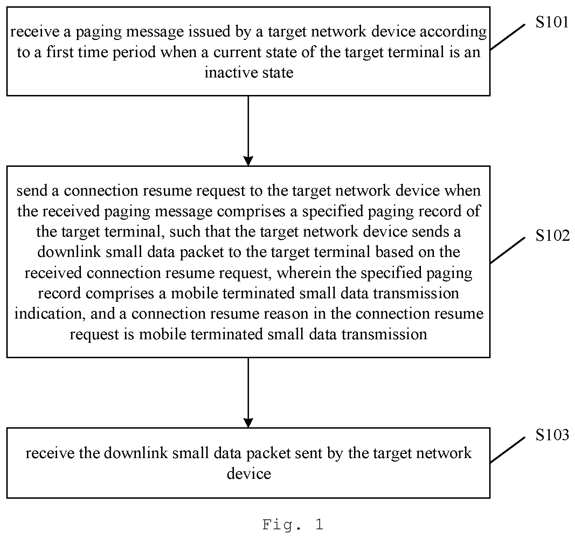

In order to solve the problem in the related art, the embodiments of the present disclosure provide a data transmission method. As shown in Fig. 1, Fig. 1 is a first schematic flowchart of a data transmission method provided by embodiments of the present disclosure. The method shown in Fig. 1 is applied to a target terminal, and specifically comprises the following steps.

At step S101, when a current state of the target terminal is an inactive state, a paging message issued by the target network device is received according to a first time period.

At step S102, when the received paging message comprises a specified paging record of the target terminal, a connection resume request is sent to the target network device, such that the target network device sends a downlink small data packet to the target terminal based on the received connection resume request. The specified paging record comprises a mobile terminated small data transmission indication, and a connection resume reason in the connection resume request is mobile terminated small data transmission.

At step S103, the downlink small data packet sent by the target network device is received.

In the embodiments of the present disclosure, the above target network device may be a network device such as a base station accessed by the target terminal, the above target terminal may be any terminal within the network coverage range corresponding to the target network device, for example, an electronic device such as a cell phone or a tablet. Here, the target network device and the target terminal described above are not specifically limited. For the convenience of understanding, description will be made below by taking the target terminal as UE and the target network device as a base station in the core network of the 5th Generation Mobile Communication Technology (5G) as examples, without any limiting effect.

By way of the method shown in Fig. 1, when a target terminal is in the inactive state, if the target terminal receives a paging message comprising a specified paging record of the target terminal itself issued by the target network device, a connection resume request may be sent to the target network device, so as to trigger small data transmission process between the target terminal and the target network device when the terminal is in the inactive state. At this time, the target network device may send a downlink small data packet to the target terminal based on the received connection resume request, and the target terminal will also receive the downlink small data packet, thereby realizing a downlink small data packet transmission process of a terminal in the inactive state.

Furthermore, compared with the related art in which the terminal in the inactive state has to switch to the connected state for data transmission, in the embodiments of the present disclosure, a new terminal access type, i.e. mobile terminated small data transmission, is introduced through a mobile terminated small data transmission indication in a specified paging record, such that the terminal may receive the downlink small data packet sent by the target network device when the terminal is in the inactive state. The signaling overhead and the delay consumption caused by switching from the inactive state to the connected state are avoided, the transmission efficiency of the downlink small data packet is improved, and the signaling overhead of the downlink small data packet is saved, which effectively reduces the signaling overhead and the delay consumption during the data transmission process.

The embodiments of the present disclosure will be explained below by way of specific embodiments.

For the above Step S101, that is, when the current state of the target terminal is the inactive state, a paging message sent by the target network device is received according to a first time period.

In the embodiments of the present disclosure, during the data service transmission process of the terminal, the terminal may be in three states, that is, the connected state (i.e., RRC_CONNECTED state), the inactive state (i.e., RRC_INACTIVE state) or the idle state (i.e., RRC_IDLE state).

When any terminal accessed to the network corresponding to the target network device is in the above inactive state, since the target network device itself cannot perceive the inactive state, the target network device will conceive that the terminal is in the connected state. The target network device may send a paging message to the target terminal conceived to be in the connected state according to a preset time period (recorded as a second time period). Correspondingly, the target terminal may receive the paging message sent by the target network device according to a preset time period (recorded as a first time period).

In some embodiments, the above paging message may comprise a paging record list. The paging record list is a list for recording a terminal that is paged, and the paging record list comprises at least one paging record.

In some embodiments, for each paging record comprised in the above paging message, this paging record may comprise at least one of a terminal identity of the paged terminal, an access type, or a mobile terminated small data transmission indication.

For example, the paging record may comprise the terminal identity of the paged terminal, the access type, or the mobile terminated small data transmission indication. For another example, the paging record may comprise the terminal identity of the paged terminal and the access type, or the terminal identity of the paged terminal and the mobile terminated small data transmission indication, or the access type and the mobile terminated small data transmission indication. For still another example, the paging record may comprise the terminal identity of the paged terminal, the access type, and the mobile terminated small data transmission indication.

The terminal identity may comprise: a NAS ID assigned by NAS to the terminal for core network paging and a complete inactive state terminal identity (recorded as Full I-RNTI) for RAN paging. The above access type is used to indicate whether the paging message is initiated by a PDU session that is not accessed by 3GPP. The mobile terminated small data transmission indication is used to indicate that the paging message is used to trigger the mobile terminated small data transmission.

The above Full I-RNTI is a terminal identity of the target terminal in the inactive state. In addition, the above access type may comprise a plurality of access types. According to different access types, during the process of initiating the RRC connection resume process by the paged terminal corresponding to the paging record, the connection resume reason varies.

For the access type in the above paging record, the value corresponding to the access type may comprise the following cases.

In a first case, when the value corresponding to the access type is 1 (recorded as an access type 1), the terminal is indicated to initiate RRC connection resume process, and the connection resume reason is set as Multimedia Priority Service (MPS) priority access.

In a second case, when the value corresponding to the access type is 2 (recorded as an access type 2), the terminal is indicated to initiate the RRC connection resume process, and the connection resume reason is set as Modulation Coding Scheme (MCS) priority access.

In a third case, when the value corresponding to the access type is any integer of 11 to 15 (respectively recorded to as access types 11-15), the terminal is indicated to initiate the RRC connection resume process, and the connection resume reason is set as high priority access.

In a fourth case, when the value corresponding to the access type is N (recorded as an access type N), for example, any integer from 4 to 10, the terminal is indicated to initiate the RRC connection resume process, and the connection resume reason is set as mobile terminated small data transmission.

In a fifth case, when the value corresponding to the access type is other value(s) than the values corresponding to the access types in the above first to four cases, for example is 3, the terminal is indicated to initiate the RRC connection resume process, and the connection resume reason is set as downlink access.

For the above first to fifth cases, when the above fourth case is satisfied, the paged terminal corresponding to the paging record will initiate the small data transmission in the inactive state process, that is, the step of sending a connection resume request to the target network device at step S102 is performed. The value corresponding to the access type in the above fourth case is set in the terminal in advance, which may be specifically set according to the needs of the user or the like and is not specifically limited here.

In some embodiments, for each paging record comprised in a paging message, in addition to the above terminal identity, access type and mobile terminated small data transmission indication, the paging record may also comprise a contention free access preamble indicating a terminal to initiate contention free random access.

When the above paging record comprises the above contention free access preamble, it represents that the target network device has allocated a contention free access preamble to the paged terminal corresponding to the paging record. At this time, the terminal may initiate contention free random access based on the contention free access preamble. When the above paging record does not comprise the above contention free access preamble, it represents that the target network device does not allocate a contention free access preamble to the paged terminal corresponding to the paging record, and in this case, the terminal needs to initiate contention random access. For contention free random access and contention random access initiated by the terminal, reference may be made to the following description, which will not be specifically explained here.

In the embodiments of the present disclosure, in order to reduce the case where the paged terminal does not receive the paging message issued by the target network device in time, the above second time period may be greater than or equal to the above first time period. That is, the time period for the target network device to issue a paging message is greater than or equal to the time period for the target terminal to receive a paging message. Here, the above first time period and second time period are not specifically limited.

For the above Step S102, that is, when the received paging message comprises a specified paging record of the target terminal, a connection resume request is sent to the target network device, such that the target network device sends a downlink small data packet to the target terminal based on the received connection resume request. The specified paging record comprises a mobile terminated small data transmission indication, and the connection resume reason in the connection resume request is mobile terminated small data transmission.

In this step, after receiving the paging message sent by the above target network device, the target terminal may determine whether the paging message comprises a specified paging record of the target terminal itself. When the paging message comprises a specified paging record of the target terminal, since the specified paging record comprises the mobile terminated small data transmission indication, the target terminal may initiate the RRC connection resume process, that is, initiate mobile terminated small data transmission process. At this time, the target terminal may send a connection resume request, that is, a RRC connection resume request, to the target network device. For the judgment of the specified paging record, reference may be made to the following description, which will not be specifically explained here.

In the embodiments of the present disclosure, the above connection resume request records a connection resume reason. According to different access types in the above paging record, when the terminal initiates the RRC connection resume process, the reasons for sending the connection resume request are also different. For example, in the above step S102, since the target terminal initiates the mobile terminated small data transmission process, at this time, the connection resume reason is downlink (small) data transmission in the inactive state, that is, mobile terminated small data transmission (MT-SDT). When the target network device receives the connection resume request, it may be determined to trigger a mobile terminated small data transmission process according to the connection resume reason recorded in the connection resume request. At this time, the target network device may send downlink data to the target terminal in the form of downlink small data packet.

In some embodiments, when the data amount of the above downlink data is less than a first data amount threshold, the target network device may send the downlink data to the target terminal as one downlink small data packet.

In other embodiments, when the data amount of the above downlink data is greater than the above first data amount threshold, the target network device may split the downlink data into a plurality of downlink small data packets with the data amount less than or equal to the first data amount threshold, and send each downlink small data packet obtained by splitting to the target terminal respectively.

In the embodiments of the present disclosure, the above data transmission between the target terminal in the inactive state and the target network device is inactive state MT-SDT, thus the data amount of the downlink small data packet sent by the target network device to the target terminal each time is less than or equal to the first data amount threshold. The above first data amount threshold may be set according to the needs of the user, a channel bandwidth, a channel bearing capacity or the like. Here, the above first data amount threshold is not specifically limited.

According to different data amounts of the above downlink data, the number of the downlink small packets sent by the target network device to the target terminal may be one or more than one. Here, the number of the above downlink small data packets is not specifically limited.

In some embodiments, when the received paging message does not comprise the specified paging record of the target terminal, the target terminal may determine that it is not a terminal paged by the target network device. At this time, the target terminal will not perform any processing, that is, the target terminal will not send a connection resume request in which the connection resume reason is mobile terminated small data transmission to the target network device.

For the above step S103, that is, the downlink small data packet sent by the target network device is received.

In this step, after the target network device sends the above downlink small data packet to the target terminal, the target terminal will receive the downlink small data packet. According to different data amounts of the above downlink data, the number of the downlink small packets received by the target terminal also varies. Here, the step of receiving the above downlink small packets by the target terminal will not be specifically explained here.

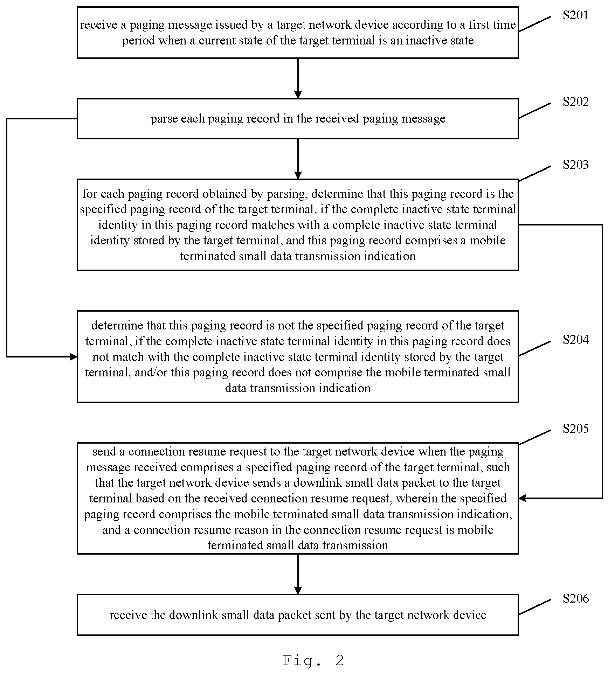

In some embodiments, according to the above method shown in Fig. 1, the embodiments of the present disclosure also provide a data transmission method. As shown in Fig. 2, Fig. 2 is a second schematic flowchart of a data transmission method provided by embodiments of the present disclosure. The method comprises the following steps.

At step S201, when a current state of the target terminal is an inactive state, a paging message issued by the target network device is received according to a first time period.

The above Step S201 is the same as the above Step S101.

At step S202, each paging record in the received paging message is parsed.

In this step, for each paging record in the received paging message, the target terminal may parse information comprised in this paging record to determine information such as a terminal identity or an access type comprised in this paging record.

In the embodiments of the present disclosure, according to different information comprised in each paging record, the information parsed by the target terminal also varies. Here, the information parsed in each paging record is not specifically limited.

At step S203, for each parsed paging record obtained by parsing, if a complete inactive state terminal identity in this paging record matches with a complete inactive state terminal identity stored by the target terminal, and this paging record comprises the mobile terminated small data transmission indication, it is determined that this paging record is a specified paging record of the target terminal.

In the embodiments of the present disclosure, the above target terminal may store a complete inactive state terminal identity corresponding to the target terminal. For each parsed paging record obtained by parsing, the target terminal may match the complete inactive state terminal identity parsed in this paging record (that is, Full I-RNTI in the above paging record) with its stored complete inactive state terminal identity, and determine whether the information parsed in this paging record comprises the mobile terminated small data transmission indication, so as to determine whether this paging record is a specified paging record of the target terminal according to a matched result and a determined result. For the complete inactive state terminal identity stored in the target terminal, reference may be made to the following description, which will not be specifically explained here.

The above matched result and determined result at least comprise the following cases.

In a first case, the complete inactive state terminal identity in the paging record is the same as the complete inactive state terminal identity stored by the target terminal, and the information parsed from the paging record comprises the mobile terminated small data transmission indication.

In a second case, the complete inactive state terminal identity in the paging record is the same as the complete inactive state terminal identity stored by the target terminal, but the information parsed from the paging record does not comprise the mobile terminated small data transmission indication.

In a third case, the complete inactive state terminal identity in the paging record is different from the complete inactive state terminal identity stored by the target terminal, but the information parsed from the paging record comprises the mobile terminated small data transmission indication.

In a fourth case, the complete inactive state terminal identity in the paging record is different from the complete inactive state terminal identity stored by the target terminal, and the information parsed from the paging record does not comprise the mobile terminated small data transmission indication.

For the above four cases, when the above first case is satisfied, the target terminal may determine the paging record as a specified paging record of the target terminal itself.

At step S204, if the complete inactive state terminal identity in this paging record does not match with the complete inactive state terminal identity stored by the terminal, and/or the paging record does not comprise the mobile terminated small data transmission indication, it is determined that this paging record is not a specified paging record of the target terminal.

For the four cases shown in the above Step S203, when any of the above second, third or fourth case is satisfied, the target terminal may determine that this paging record is not a specified paging record of the target terminal itself.

For the paging message received by the target terminal, when it is determined that each paging record in the paging message is not a specified paging record of the target terminal itself, the target terminal may determine that the paging message does not comprise a specified paging record of the target terminal itself.

In the embodiments of the present disclosure, according to different matching cases between the complete inactive state terminal identity in each paging record in the paging message and the complete inactive state terminal identity stored by the target terminal, and different cases where whether each paging record comprises the mobile terminated small data transmission indication, the target terminal will perform the above Step S203 or Step S204 respectively. Here, the performing of the above Steps S203 and S204 is not specifically limited.

In some embodiments, when the paging record in the above paging message satisfies the second case in the four cases in the above Step S203, that is, the complete inactive state terminal identity in the paging record is the same as the complete inactive state terminal identity stored by the target terminal, but the information parsed from the paging record does not comprise the mobile terminated small data transmission indication, the target terminal may determine that it is a terminal paged by the target network device. At this time, the target terminal may initiate the RRC connection resume process according to the value corresponding to the access type in the paging message by way of the method shown in the first, second, third or fifth case in the five cases shown in the above Step S101. The resume reason in the connection resume request matches with the value corresponding to the access type, which is not specifically explained here.

In other embodiments, when the paging record in the above paging message satisfies the third or fourth case in the four cases in the above Step S203, since the complete inactive state terminal identity in the paging record is different from the complete inactive state terminal identity stored by the target terminal, the target terminal may determine that it is not a terminal paged by the target network device. At this time, the target terminal may not perform any processing.

By way of the above Steps S202 to S204, the target terminal may accurately determine whether the received paging message comprises a specified paging record of the target terminal itself, and initiate a mobile terminated small data transmission process when the paging message comprises a specified paging record, which provides assurance for initiation of the downlink small data transmission process of the target terminal.

At step S205, when the received paging message comprises a specified paging record of the target terminal, a connection resume request is sent to the target network device, such that the target network device sends a downlink small data packet to the target terminal based on the received connection resume request. The specified paging record comprises the mobile terminated small data transmission indication, and the connection resume reason in the connection resume request is mobile terminated small data transmission.

At step S206, the downlink small data packet sent by the target network device is received.

The above Steps S205 to S206 are the same as the above Steps S102 to S103.

In some embodiments, the above target terminal may store the CG configuration information of the target terminal, and the CG configuration information is configured grant resource configured for small data transmission. For the CG configuration information stored in the target terminal, reference may be made to the following description, which will not be specifically explained here.

In the embodiments of the present disclosure, the above CG configuration information may be used for configured grant resource configuration during the uplink small data transmission process between the target terminal and the target network device, and may also be used for configured grant resource configuration during the downlink small data transmission process between the target terminal and the target network device.

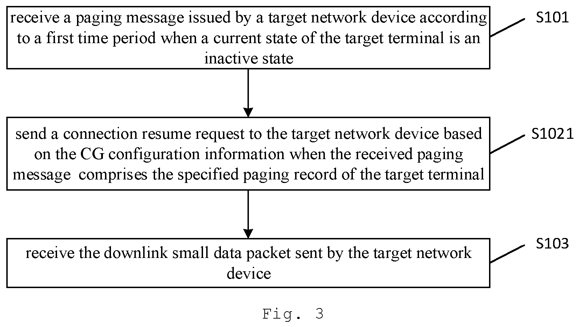

In some embodiments, when the target terminal stores the CG configuration information, according to the above method shown in Fig. 1, the embodiments of the present disclosure also provide a data transmission method. As shown in Fig. 3, Fig. 3 is a third schematic flowchart of a data transmission method provided by embodiments of the present disclosure. In the method shown in Fig. 3, the above step S102 is refined into the following step, that is, step S1021.

At step S1021, when the received paging message comprises a specified paging record of the target terminal, the connection resume request is sent to the target network device based on the CG configuration information.

In this step, since the target terminal stores the CG configuration information, the target terminal may initiate a small data transmission in the inactive state process in a configured grant manner based on the CG configuration information stored in the target terminal. That is, the target terminal may configure SDT based on the CG configuration information, configuring small data transmission on the initial BWP of the target terminal, or configuring small data transmission on the Normal Uplink (NUL) and the Supplementary Uplink (SUL) carrier of the target terminal.

In some embodiments, for the CG configuration information stored by the target terminal, if the target terminal moves from the current RAN cell to other RAN cell(s) and initiates a connection resume process in other RAN cell (s), the stored CG configuration information will be released. That is, the SDT resource configured by the target terminal based on the CG configuration information is only effective in a cell where the target terminal receives a RRC release message (recorded as a first release message) and shifts to the RRC inactive state. For receiving the first release message, reference may be made to the following description, which will not be specifically explained here.

For the convenience of understanding, take the RAN cell where the target terminal is currently situated as a cell A as an example. At a certain moment, when the target terminal accesses other RAN cell(s), for example, a cell B, as the user moves, the configured grant (CG) configuration information received and stored by the target terminal in the cell A will not be used to initiate the connection resume process in the cell B. The above cell is an abbreviation of a base station cell (also referred to as a cellular cell).

By way of the above step S1021, the target terminal may initiate a small data transmission in the inactive state process in a CG configured grant manner based on the CG configuration information stored by in the target terminal.

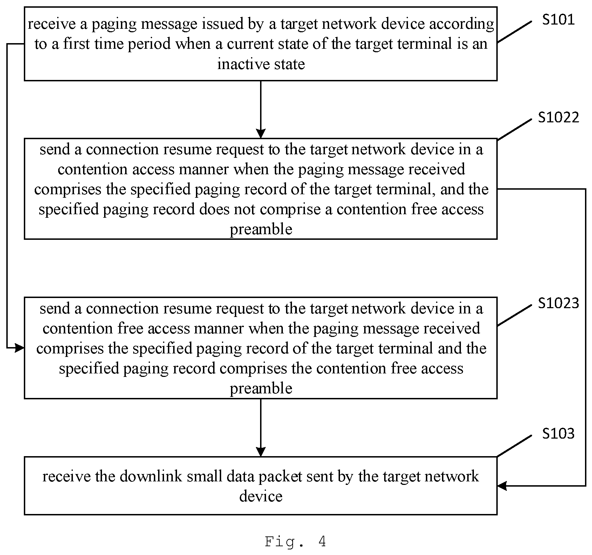

In some embodiments, when the target terminal does not store the above CG configuration information, according to the above method shown in Fig. 2, the embodiments of the present disclosure also provide a data transmission method. As shown in Fig. 4, Fig. 4 is a fourth schematic flowchart of a data transmission method provided by embodiments of the present disclosure. In the method shown in Fig. 4, the above Step S102 is refined into the following steps, that is, step S1022 to step S1023.

At step S1022, when the received paging message comprises a specified paging record of the target terminal, and the specified paging record does not comprise a contention free access preamble, the connection resume request is sent to the target network device in a contention access manner.

At step S1023, when the received paging message comprises a specified paging record of the target terminal and the specified paging record comprises a contention free access preamble, the connection resume request is sent to the target network device in a contention free access manner.

In the embodiments of the present disclosure, since the above target terminal does not store the above CG configuration information, the target terminal cannot initiate a small data transmission in the inactive state process in a CG configured grant manner. At this time, the target terminal may initiate a small data transmission in the inactive state process in a random access manner.

When the received paging message comprises a specified paging record of the target terminal, the specified paging record may or may not comprise the above contention free access preamble.

In some embodiments, when the above specified paging record does not comprise the above contention free access preamble, the target terminal will perform the above step S1022, that is, the target terminal may initiate a small data transmission in the inactive state process in a contention access manner.

In other embodiments, when the above specified paging record comprises the above contention free access preamble, the target terminal will perform the above step S1023, that is, will initiate a small data transmission in the inactive state process in a contention free access manner based on the contention free access preamble in the specified paging record. Specifically, the target terminal may send the contention free access preamble to the target network device. The target network device feeds back a random access response message to the target terminal according to the received contention free access preamble. At this time, the target terminal will receive the random access response message. The target terminal may obtain uplink synchronization according to the timing synchronization information of the random access response message, and send the connection resume request according to an uplink resource allocated by the target network device.

In the above steps S1022 and S1023, the SDT based on Random Access Channel (RACH) may be configured on the initial BWP of the terminal, and the SDT based on RACH may also be configured on the NUL and SUL carrier of the terminal.

For the above RACH-based SDT process, the target terminal will receive the 2-step RACH and/or 4-step RACH resource(s) sent by the target network device for SDT transmission.

In the embodiments of the present disclosure, the above steps S1022 and S1023 are performed respectively according to whether the specified paging record comprises a contention free access preamble. Here, the performing of the above steps S1022 and S1023 is not specifically limited.

By way of the above steps S1022 and S1023, in the case where the target terminal does not store the CG configuration information, for example, the above target terminal moves from a certain RAN cell to another RAN cell, a small data transmission in the inactive state process may be initiated in contention access manner and contention free access manner which are different according to the presence or absence of the contention free access preamble in the specified paging record, thereby effectively improving the flexibility of the small data transmission in the inactive state.

In some embodiments, the priority of the above small data transmission in the inactive state initiated based on the CG configuration information may be higher than the priority of the above small data transmission in the inactive state initiated in a random access manner. That is, in the case where the target terminal stores the above CG configuration information, no matter whether the above specified paging record comprises the above contention free access preamble, the target terminal may preferentially use the method shown in the above step S1021 to send the connection resume request to the target network device.

In some embodiments, before the connection resume request is sent to the target network device, it is judged whether the target terminal satisfies a preset connection initiating condition at a current moment.

Here, the preset connection initiating condition comprises: a mobile terminated small data transmission indication is received; or a mobile terminated small data transmission indication is received, and the downlink reference signal receiving power (RSRP) is greater than a preset threshold.

In some embodiments, the above preset connection initiating condition is expressed as: a mobile terminated small data transmission indication is received; or a mobile terminated small data transmission indication is received, and a lower layer below RRC layer indicates that triggering condition of small data transmission is satisfied.

In some embodiments, in a case where another preset connection initiating condition is satisfied, another connection resume request is sent such that the target terminal sends an uplink data packet to the target network device after a connection corresponding to this another connection resume request is resumed. Another preset connection initiating condition is: the data amount of the radio bearer configured for the mobile terminated small data transmission is less than a preset data amount threshold; or the data amount of the radio bearer configured for the mobile originated small data transmission is less than a preset data amount threshold, and the uplink small data transmission resource is effective.

In some embodiments, the above another preset connection initiating condition may also be expressed as: the upper layer above the Radio Resource Control (RRC) layer requires resuming the RRC connection, the System Information Block Type 1 (SIB1) contains a common configuration of small data transmission, small data transmission configuration is configured, all the uplink small data is mapped to the radio bearer of the small data transmission configuration, and a lower layer below RRC layer indicates that triggering condition of small data transmission is satisfied.

Here, the above preset connection initiating condition and another preset connection initiating condition are not specifically limited. The above preset data amount threshold and preset threshold may be set according to the needs of the user, the bearing capacity of the wireless network or the like, which are not specifically limited here.

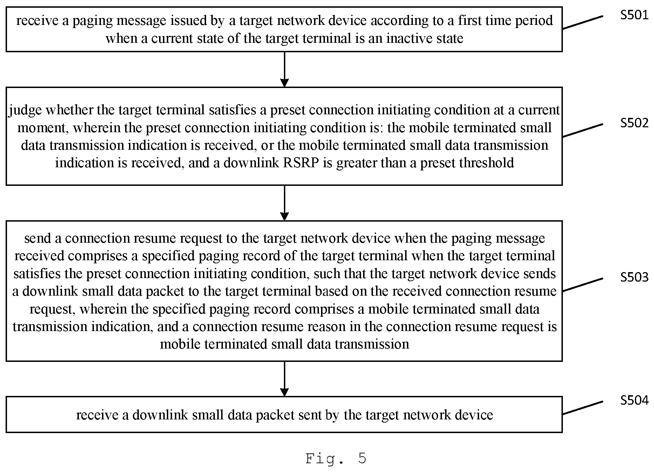

In some embodiments, according to the above method shown in Fig. 1, the embodiments of the present disclosure also provide a data transmission method. As shown in Fig. 5, Fig. 5 is a fifth schematic flowchart of a data transmission method provided by embodiments of the present disclosure. The method comprises the following steps.

At step S501, when the current state of the target terminal is an inactive state, a paging message issued by the target network device is received according to a first time period.

The above step S501 is the same as the above step S101.

At step S502, when the received paging message comprises a specified paging record of the target terminal, it is judged whether the target terminal satisfies a preset connection initiating condition at a current moment. The preset connection initiating condition is: a mobile terminated small data transmission indication is received; or a mobile terminated small data transmission indication is received, and the downlink RSRP is greater than a preset threshold. In this step, when the paging message received by the target terminal comprises a specified paging record of the target terminal itself, the target terminal may judge whether the target terminal itself satisfies a preset connection initiating condition, and when it satisfies the preset initiation condition, step S503 is performed.

The above lower layer below the RRC layer may be a Medium Access Control (MAC) layer, a Physical (PHY) layer or the like. The upper layer above the RRC layer may be any layer above the RRC layer. Here, the above upper layer and lower layer are not specifically limited.

At step S503, when the target terminal satisfies the preset connection initiating condition, a connection resume request is sent to the target network device, such that the target network device sends a downlink small data packet to the target terminal based on the received connection resume request. The specified paging record comprises a mobile terminated small data transmission indication, and the connection resume reason in the connection resume request is mobile terminated small data transmission.

In this step, when the target terminal satisfies the above preset connection initiating condition, the target terminal may send a connection resume request to the target network device. Reference may be specifically made to the sending of a connection resume request in the above step S102, which will not be specifically explained here.

In some embodiments, when the target terminal does not satisfy the above preset connection initiating condition, the target terminal may not perform processing. That is, the above step of sending the connection resume request is not performed.

By judging the above preset connection initiating condition, it can be ensured that the target terminal has satisfied the condition for initiating the small data transmission in the inactive state, which provides assurance for a successful small data transmission in the inactive state process between the target terminal and the target network device.

At step S504, a downlink small data packet sent by the target network device is received.

The above step S504 is the same as the above step S103.

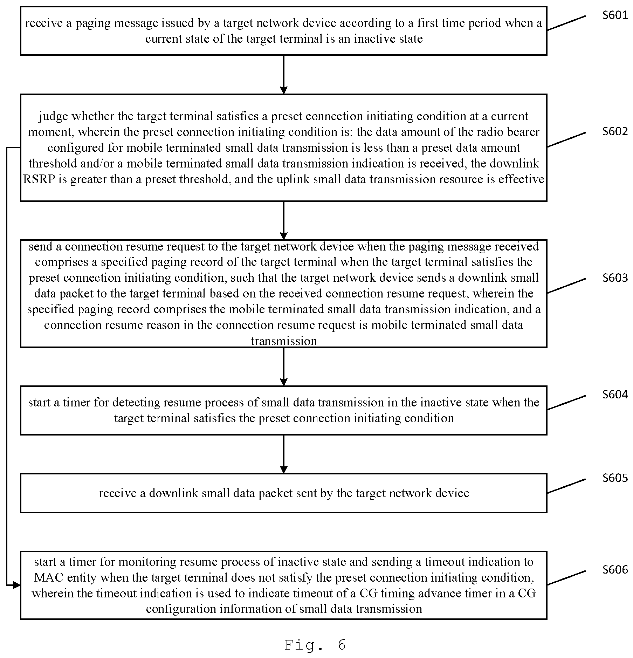

In some embodiments, according to the above method shown in Fig. 5, the embodiments of the present disclosure also provide a data transmission method. As shown in Fig. 6, Fig. 6 is a sixth schematic flowchart of a data transmission method provided by embodiments of the present disclosure. The method comprises the following steps.

At step S601, when the current state of the target terminal is an inactive state, a paging message sent by the target network device is received according to a first time period.

At step S602, when the received paging message comprises a specified paging record of the target terminal, it is judged whether the target terminal satisfies a preset connection initiating condition at a current moment. The preset connection initiating condition is: the data amount of the radio bearer configured for the mobile terminated small data transmission is less than a preset data amount threshold and/or a mobile terminated small data transmission indication is received, the downlink RSRP is greater than a preset threshold, and the uplink small data transmission resource is effective.

At step S603, when the target terminal satisfies the preset connection initiating condition, a connection resume request is sent to the target network device, such that the target network device sends a downlink small data packet to the target terminal based on the received connection resume request. The specified paging record comprises a mobile terminated small data transmission indication, and the connection resume reason in the connection resume request is mobile terminated small data transmission.

The above steps S601 to S603 are the same as the above steps S501 to S503.

At step S604, when the target terminal satisfies the preset connection initiating condition, a timer for detecting a small data transmission in the inactive state resume process is started.

The above step S603 and the above step S604 are both performed when the target terminal satisfies the preset connection initiating condition. Here, the sequence of performing the above step S603 and the above step S604 is not specifically limited.

At step S605, a downlink small data packet sent by the target network device is received.

The above step S605 is the same as the above step S504.

At step S606, when the target terminal does not satisfy the preset connection initiating condition, a timer for monitoring an inactive resume process is started, and a timeout indication is sent to the MAC entity. The timeout indication is used to indicate timeout of the CG timing advance timer in the CG configuration information of small data transmission.

By way of the above steps S604 and S606, the target terminal may start a timer for detecting an inactive transmission resume process when the preset connection initiating condition is satisfied to ensure that timeout does not occur during the inactive transmission resume process, and start a timer for monitoring an inactive resume process when the preset connection initiating condition is not satisfied to provide assurance for an inactive resume process.

In some embodiments, the above connection resume request is a first connection resume request or a second connection resume request.

The above first connection resume request and second connection resume request each comprises: a resume identifier, a resume integrity check code, and a connection resume reason.

The resume identifier of the first connection resume request is a complete inactive state terminal identity stored by the target terminal, and the resume identifier of the second connection request is a truncated inactive state terminal identity stored by the target terminal. The resume integrity check code is an identity authentication token for terminal identity authentication at the base station. The complete inactive state terminal identity and the truncated inactive state terminal identity are wireless network temporary identifier values of a terminal in the inactive state, and are used for the target network side to find an anchor point before the terminal enters the inactive state and the access layer context information stored by the anchor point. The complete inactive state terminal identity and the truncated inactive state terminal identity have different sizes.

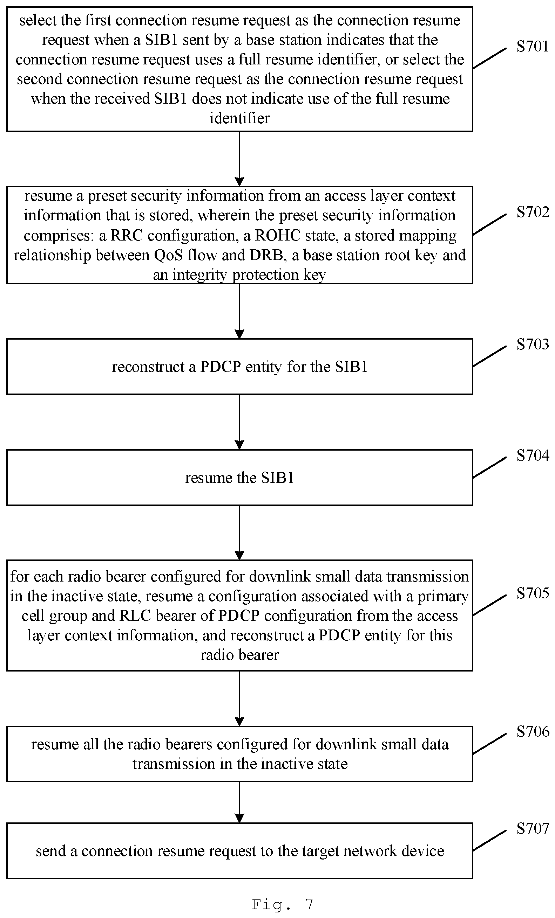

In some embodiments, according to the above method shown in Fig. 1, the embodiments of the present disclosure also provide a connection resume request sending method. As shown in Fig. 7, Fig. 7 is a schematic flowchart of a connection resume request sending method provided by embodiments of the present disclosure. The method comprises the following steps.

At step 701, when SIB1 sent by a base station indicates that the connection resume request uses a full resume identifier, the first connection resume request is selected as the connection resume request; or when the received SIB1 does not indicate the use of a full resume identifier, the second connection resume request is selected as a connection resume request.

In this step, the base station in the core network may send SIB1 to the target terminal. The target terminal will receive the SIB1. The SIB1 comprises an information indicating a resume identifier used in the connection resume request.

In some embodiments, when the received SIB1 indicates that the resume identifier in the connection resume request uses a full resume identifier, the target terminal may determine that the resume identifier in the connection resume request is the complete inactive state terminal identity stored by the target terminal. At this time, the target terminal may select the above first connection resume request as the connection resume request.

In other embodiments, when the received SIB1 does not indicate that the resume identifier in the connection resume request uses a full resume identifier, the target terminal may determine that the resume identifier in the connection resume request is the truncated inactive state terminal identity (recorded as Short I-RNTI) stored by the target terminal. At this time, the target terminal may select the second connection resume request as the connection resume request.

At step S702, a preset security information is resumed from the stored access layer context information. The preset security information comprises a RRC configuration, a ROHC state, a stored mapping relationship between QoS flow and DRB, a base station root key and an integrity protection key.

In the embodiments of the present disclosure, the above access layer context information may be stored in an anchor point. The anchor point reserves context information of UE and an NG connection between an Access and Mobility Management Function (AMF) and a User Plane Function (UPF) related to UE for a final service base station (gNB). The NG is a logical interface between the radio access network and the core network.

At step S703, a PDCP entity is reconstructed for SIB1.

At step S704, SIB1 is resumed.

At step S705, for each radio bearer configured for the mobile terminated small data transmission, a configuration associated with a primary cell group and RLC bearer of PDCP configuration is resumed from the access layer context information, and a PDCP entity is reconstructed for this radio bearer.

At step S706, all the radio bearers configured for the mobile terminated small data transmission are resumed.

At step S707, the connection resume request is sent to the target network device.

The above steps S701 to S707 are refinement of the step of sending a connection resume request to the target network device in the above step S102.

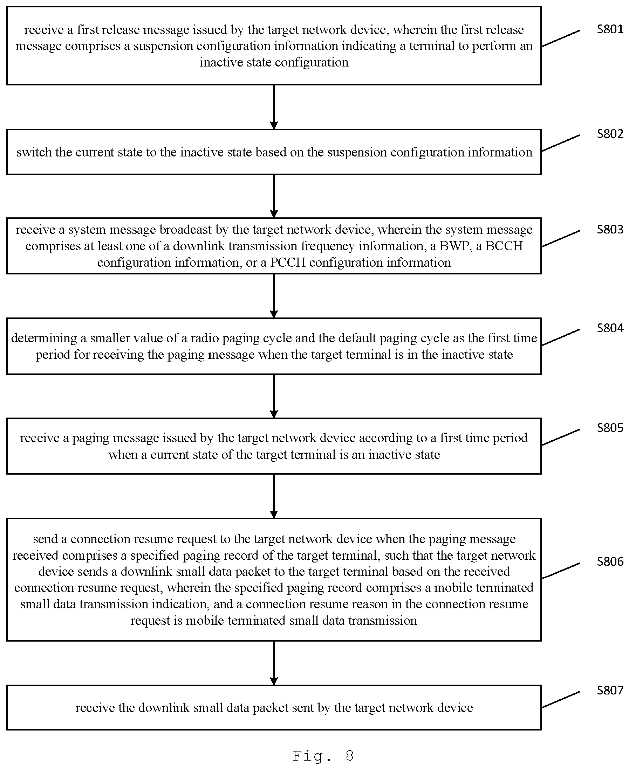

In some embodiments, according to the above method shown in Fig. 1, the embodiments of the present disclosure also provide a data transmission method. As shown in Fig. 8, Fig. 8 is a seventh schematic flowchart of a data transmission method provided by embodiments of the present disclosure. The method comprises the following steps.

At step S801, when the current state of the target terminal is a connected state, a first release message issued by the target network device is received. The first release message comprises a suspension configuration information indicating the terminal to perform an inactive state configuration.

In the embodiments of the present disclosure, in addition to be in the inactive state, the above target terminal may also be in a connected state and an idle state. When the target terminal is in the connected state, the target network device may send a RRC release message (recorded as a first release message) to the target terminal. At this time, the target terminal will receive the first release message.

In some embodiments, the above first release message may comprise a suspension configuration information. The suspension configuration information is used to indicate the terminal to perform an inactive state configuration.

The above suspension configuration information may comprise: a complete inactive state terminal identity (i.e., the above Full I-RNTI), a truncated inactive state terminal identity (i.e., the above Short I-RNTI), a radio paging cycle, radio (RAN) notification area information, a timer, a next hop chaining count value and a configuration information of mobile terminated small data transmission.

In some embodiments, the above complete inactive state terminal identity and truncated inactive state terminal identity are wireless network temporary identifier values of a terminal in the inactive state, and are used for target network side to find an anchor point node before the terminal enters the inactive state and the access layer context information stored by the anchor point node. The complete inactive state terminal identity and the truncated inactive state terminal identity have different sizes. For example, the size of the complete inactive state terminal identity may be 40 bits, and the size of the truncated inactive state terminal identity may be 24 bits. Here, the sizes of the complete inactive state terminal identity and the truncated inactive state terminal identity are not specifically limited.

The above radio paging cycle is a RAN paging cycle configured by a RAN side node (for example, a base station) for the terminal in the inactive state. The radio paging cycle may be 32 radio frames, 64 radio frames, 128 radio frames, 256 radio frames or the like. Here, the radio paging cycle is not specifically limited.

The radio (RAN) notification area information may comprise a list of cells configured as RAN area, and a RAN area code or a Random Access (RA) code of a RAN area (i.e., a radio area configuration list).

The above timer is used to trigger a periodic RNAU process in the terminal.

The above next hop chaining count value is used to calculate a security key after connection is resumed.

The above configuration information of mobile terminated small data transmission comprises at least one of a DRB list of small data transmission or a SRB2 indication of small data transmission. The DRB list of small data transmission indicates a DRB identifier of the small data transmission configuration, and the SRB2 indication of small data transmission is used for indicating the presence or absence of SRB2 of the small data transmission configuration of the terminal. SRB is Signaling Radio Bearer. For example, the configuration information of mobile terminated small data transmission comprises the DRB list of small data transmission or the SRB2 indication of small data transmission. For another example, the configuration information of mobile terminated small data transmission comprises the DRB list of small data transmission and the SRB2 indication of small data transmission.

In the above DRB list of small data transmission in the inactive state, if the sequence size is 0, the target terminal may determine that the network does not configure DRB for small data transmission.

In some embodiments, the above configuration information of mobile terminated small data transmission may further comprise CG configuration information. The CG configuration grant information comprises: a CG SSB RSRP threshold, a CG timing advance timer, a CG timing advance verification configuration and a CG RSRP variation threshold.

The above CG SSB RSRP threshold is a RSRP threshold selected by SSB (Single Side Band) performing small data transmission based on CG resource. The above CG timing advance timer is used for timing synchronization of small data transmission. The CG timing advance verification configuration is used for a configuration of TA verification based on RSRP. The above CG RSRP variation threshold is a RSRP threshold for TA verification of small data transmission.

In some embodiments, when the above CG timing advance verification configuration is not configured in the above CG configuration information, the target terminal will not perform the process of TA verification based on RSRP.

In the embodiments of the present disclosure, for the above suspension configuration information, when the network redirects A terminal to an carrier frequency of inter Radio Access Technology (RAT) or configures a Dual Active Protocol Stack (DAPS) bearer for the terminal, the network does not configure the suspension configuration information for the terminal, that is, the above first release message does not comprise the above suspension configuration information.

In some embodiments, the target terminal may store the above suspension configuration information after receiving the above suspension configuration information. For example, the target terminal may store the above Full I-RNTI and the Short I-RNTI. According to the stored Full I-RNTI and Short I-RNTI, the above specified paging record is queried, and the first connection resume request/second connection resume request is sent, and so forth.

At step S802, the current state is switched to the inactive state based on the suspension configuration information.

In the embodiments of the present disclosure, after receiving the above first release message, the target terminal will perform the following steps based on the first release message to switch the current state of the target terminal from the connected state to the inactive state.

In a first step, MAC is reset, and a default MAC cell group configuration is released.

In a second step, the suspension configuration information is applied.

In a third step, when the CG configuration information is comprised in the suspension configuration information, each DRB in the DRB list of small data transmission and the SRB2 indication of small data transmission are determined as DRB and SRB2 during process of the small data transmission; a RLC entity is reconstructed for each RLC bearer in the target terminal configuration; a PDCP entity is triggered to perform an SDU discarding process for resumed SRB2 and SRB1; a small data transmission CG resource is configured for the MAC entity, and it is indicated to start the CG timing advance timer.

In a fourth step, a current access layer root key (KgNB) and integrity protection key of RRC signaling (KRRCint), a ROHC state, a stored mapping rule between QoS flow and data resource bearer (DRB), C-RNTI used in a source PCell, a cell identifier, a physical cell identifier of the source PCell, a SpCell common configuration in a synchronous reconfiguration message of NR PSCell, and all the other configuration parameters than parameters in a synchronization reconfiguration message of PCell, parameters in a synchronization reconfiguration message of NR PSCell, a mobility control information of SCG of E-UTRA PSCell, a PSCell configuration in EN-DC and a service cell common configuration SIB are stored in the access layer context information of the terminal in the inactive state.

The above SpCell is a set of the above Pcell and PSCell, which may be expressed as: SpCell=Pcell+PSCell. The EN-DC is E-UTRA NR dual connectivity with Master Cell Group (MCG) using universal terrestrial radio access (e-utra) and SCG using new radio (NR).

In the above fourth step, the above SpCell common configuration in the synchronization reconfiguration message of NR PSCell, as well as other configuration parameters than the parameters in the synchronization reconfiguration message of PCell, the parameters in the synchronization reconfiguration message of NR PSCell, and the mobility control information of SCG of E-UTRA PSCell are all processed according to the configuration condition in the above CG configuration, which will not be specifically explained here.

In a fifth step, all SRBs except SRB0 and DRBs are suspended.

In a sixth step, the lower layers of all DRBs are indicated to perform PDCP suspension, and the lower layers are located below the RRC layer.

In a seventh step, the inactive state is switched to, and cell reselection is performed.

In the above seventh step, the target terminal may perform cell reselection according to relevant standards, for example, the steps in TS38.304. Here, the process of cell reselection will not be specifically explained here.

By way of the above steps S801 to S802, the target terminal may switch the current state from the connected state to the inactive state according to the received first release message, which facilitates that the target terminal may rapidly enter the inactive state from the connected state, and also facilitates process of a small data transmission in the inactive state when a specified paging record of the target terminal is received later, thereby reducing the signaling overhead and the delay consumption during the data transmission process.

At step S803, a system message broadcast by the target network device is received. The system message comprises at least one of downlink transmission frequency information, an initial downlink BWP, the BCCH configuration information or the PCCH configuration information.

For example, the system message may comprise the downlink transmission frequency information, the initial downlink BWP, the BCCH configuration information or the PCCH configuration information. For another example, the system message may comprise the downlink transmission frequency information and the initial downlink BWP, or the BCCH configuration information and the PCCH configuration information, or the downlink transmission frequency information and the BCCH configuration information, or the downlink transmission frequency information and the PCCH configuration information, or the initial downlink BWP and the BCCH configuration information, or the initial downlink BWP and the PCCH configuration information. For still another example, the system message may comprise the downlink transmission frequency information, the initial downlink BWP and the BCCH configuration information, or the initial downlink BWP, the BCCH configuration information and the PCCH configuration information, or the downlink transmission frequency information, the BCCH configuration information and the PCCH configuration information, or the downlink transmission frequency information, the initial downlink BWP and the PCCH configuration information. For yet still another example, the system message comprises the downlink transmission frequency information, the initial downlink BWP, the BCCH configuration information and the PCCH configuration information.

In this step, the above target network device may broadcast a system message within its corresponding network coverage. At this time, each terminal within the network coverage may receive the system message. That is, the above target terminal may receive the system message.

The above system message may comprise a downlink common configuration information for downlink small data transmission and reception. The downlink common configuration information may comprise the downlink transmission frequency information, the initial downlink BWP, a BCCH configuration information and the PCCH configuration information.

The above initial downlink BWP is an initial downlink BWP configuration of the primary cell (i.e., the above PCell). The above BCCH configuration information is a configuration related to modifying a passing cycle of the system message. The PDCCH configuration information comprises a default paging cycle, a paging frame number and configuration, a number of paging occasions and a first PDCCH monitoring occasion.

The default paging cycle is a default paging cycle broadcast in the system message. The paging frame number and configuration is used to derive a total number of paging frames and a paging frame offset. The number of paging occasions is used to indicate the number of paging occasions in each paging frame. The paging occasions are a group of PDCCH monitoring occasions consisting of a plurality of time slots for sending a paging control information. The first PDCCH monitoring occasion is a first PDCCH monitoring occasion indicating to monitor a paging occasion of a paging frame.

In the embodiments of the present disclosure, the sequence of performing the above steps S801 to S803 is not specifically limited.

At step S804, a smaller value of the radio paging cycle and the default paging cycle is determined as the first time period for receiving the paging message when the target terminal is in the inactive state. The radio paging cycle is a RAN paging cycle configured by a wireless access network (RAN) side node for the terminal in the inactive state.

In this step, according to the default paging cycle in the downlink common configuration information comprised in the above system message and the radio paging cycle in the suspension configuration information comprised in the above first release message, the target terminal may obtain a smaller paging cycle of the default paging cycle and the radio paging cycle, and determine this paging cycle as a time period for receiving the paging message by the target terminal (i.e., the above first time period). That is, when the default paging cycle is less than the radio paging cycle, the default paging cycle is determined as the above first time cycle; and when the default paging cycle is greater than the radio paging cycle, the radio paging cycle is determined as the above first time cycle.

By way of the above steps S803 to S804, the target terminal may determine a time period for receiving the paging message by the target terminal itself according to paging periods comprised in the system message and the first release message, which may effectively ensure that the target terminal may receive the paging message issued by the target network device as much as possible.

At step S805, when a current state of a target terminal is an inactive state, a paging message issued by a target network device is received according to a first time period.

In some embodiments, the above first time period is a smaller value of the radio paging period in the suspension configuration information and the default paging period in the downlink common configuration information.

At step S806, when the received paging message comprises a specified paging record of the target terminal, a connection resume request is sent to the target network device, such that the target network device sends a downlink small data packet to the target terminal based on the received connection resume request. The specified paging record comprises a mobile terminated small data transmission indication, and the connection resume reason in the connection resume request is mobile terminated small data transmission.

At step S807, the downlink small data packet sent by the target network device is received.

The above steps S805 to S807 are the same as the above steps S101 to S103.

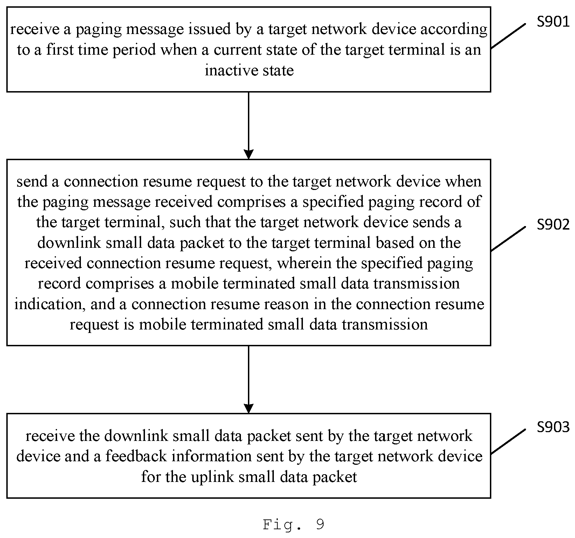

In some embodiments, the above connection resume request may also comprise an uplink small data packet. When the above connection resume request comprises an uplink small data packet, according to the above method shown in Fig. 1, the embodiments of the present disclosure also provide a data transmission method. As shown in Fig. 9, Fig. 9 is an eighth schematic flowchart of a data transmission method provided by embodiments of the present disclosure. The method comprises the following steps.

At step S901, when a current state of a target terminal is an inactive state, a paging message issued by a target network device is received according to a first time period.

The above step S901 is the same as the above step S101.

At step S902, when the received paging message comprises a specified paging record of the target terminal, a connection resume request is sent to the target network device, such that the target network device sends a downlink small data packet to the target terminal based on the received connection resume request. The specified paging record comprises a mobile terminated small data transmission indication, and the connection resume reason in the connection resume request is mobile terminated small data transmission.

In the above Step S902, when the target terminal sends the connection resume request to the above target network device, the connection resume request may further comprise an uplink small data packet. The uplink small data packet is a data packet corresponding to uplink data or a sub-packet obtained by splitting the uplink data. For the uplink small data packet, reference may be made to the description of the above downlink small data packet, which will not be specifically explained here.

The data amount of the above uplink small data packet may be less than or equal to a second data amount threshold.

In the embodiments of the present disclosure, when the above target network device receives the above connection resume request comprising an uplink small data packet, in addition to sending the above downlink small data packet to the target terminal, the target network device may also generate corresponding feedback information for the uplink small data packet in the connection resume request, and send the feedback information to the target terminal, that is, send the downlink small data packet together with the feedback information to the target terminal. Here, the generation of the feedback information will not be specifically explained here.

At step S903, the downlink small data packet sent by the target network device and the feedback information sent by the target network device for the uplink small data packet are received.

In this step, since the target network device sends the feedback information for the above uplink small data packet to the target terminal in addition to sending the above downlink small data packet to the target terminal, the target terminal will receive the above downlink small data packet and the feedback information.

In some embodiments, when the above uplink small data packet is a sub-packet corresponding to the uplink data, that is, there are still some uplink small data packet(s) in the target terminal not sent to the target network device. When the target terminal receives the feedback information sent by the target network device, the target terminal may send the remaining unsent uplink small data packet(s) to the target network device. The target network device receives the uplink small data packet sent by the target terminal, and obtains all the uplink data sent by the target terminal to the target network device.

In the above embodiments, since the number of the above remaining unsent uplink small data packets might be more than one, the target terminal only transmits one uplink small data packet in each sending process during the mobile originated small data transmission process. The data amount of each uplink small data packet is less than or equal to the above second data amount threshold.

The above second data amount threshold may be greater than, less than or equal to the above first data amount threshold, and may be specifically set with reference to the setting method of the above first data amount threshold. Here, the second data amount threshold is not specifically limited.

During the above uplink small data transmission process, the uplink small data packet may be transmitted by using small data transmission resource configured by the CG configuration information allocated by the target network device or uplink timefrequency resource temporarily scheduled by the target network device.

By carrying the above uplink small data packet in the above connection resume request, the inactive uplink data transmission process is realized, the signaling overhead and the delay consumption caused by switching from the inactive state to the connected state is avoided, the transmission efficiency of the uplink small data packet is improved, and the signaling overhead of the uplink small data packet is saved, which effectively reduces the signaling overhead and the delay consumption during the data transmission process.

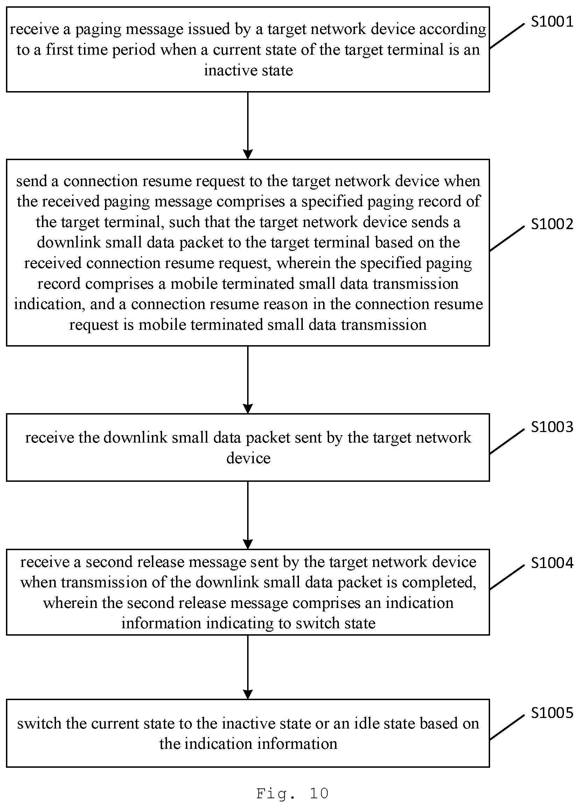

In some embodiments, according to the above method shown in Fig. 1, the embodiments of the present disclosure also provide a data transmission method. As shown in Fig. 10, Fig. 10 is a ninth schematic flowchart of a data transmission method provided by embodiments of the present disclosure. The method comprises the following steps.

At step S1001, when a current state of a target terminal is an inactive state, a paging message issued by a target network device is received according to a first time period.

At step S1002, when the received paging message comprises a specified paging record of the target terminal, a connection resume request is sent to the target network device, such that the target network device sends a downlink small data packet to the target terminal based on the received connection resume request. The specified paging record comprises a mobile terminated small data transmission indication, and the connection resume reason in the connection resume request is mobile terminated small data transmission.

At step S1003, the downlink small data packet sent by the target network device is received.

The above steps S1001 to S1003 are the same as the above steps S101 to S103.

At step S1004, a second release message sent by the target network device when transmission of the downlink small data packet is completed is received. The second release message comprises indication information indicating to switch state.

In this step, when the target network device completes the above downlink small data packet transmission, that is, after sending all the downlink small data packets corresponding to the above downlink data to the target terminal, the target network device may send a RRC release message (recorded as a second release message) to the target terminal. At this time, the target terminal will receive the second release message.

In the embodiments of the present disclosure, the indication information in the above second release message may be used to indicate that the current state of the terminal is switched to the inactive state, or may also be used, as the above suspension configuration information, to indicate that the current state of the terminal is switched to the idle state. According to different states required to be switched by the target terminal, the above indication information in the second release message also varies. Here, the indication information in the above second release message is not specifically limited.

At step S1005, the current state is switched to the inactive state, or the idle state based on the indication information.

In this step, after receiving the above second release message, the target terminal may perform state switching based on the indication information in the second release message. For example, the current state is switched to the inactive state or the idle state. For the state switching process of the target terminal, it will not be specifically explained here.

In the embodiments of the present disclosure, after the above target terminal is switched to the inactive state or the idle state according to the indication information in the above second release message, the target terminal and the target network device will no longer be able to perform the above small data transmission in the inactive state, that is, the above uplink small data packet transmission and the downlink small data packet transmission are no longer performed.

By sending the above second release message, the RRC connection between the target terminal and the target network device may be disconnected in time, when the small data transmission in the inactive state is completed, to release system resource.

In some embodiments, when the number of the above downlink small data packets is more than one, in order to further reduce the signaling overhead and the delay consumption during the data transmission process, for the last transmitted downlink small data packet among the downlink small data packets, the target network device may send this downlink small data packet together with the above second release message to the target terminal.

In the above embodiments, the above second release message is sent after the transmission of the last downlink small data packet corresponding to the downlink data is completed. Besides, when the data amount of the above uplink data is greater than that of the downlink data, that is, after the transmission of all the downlink small data packets has been completed, the transmission of all the uplink small data packets has not been completed, the target network device may send the above second release message to the target terminal after receiving the last uplink small data packet. Here, the sending time of the above second release message is not specifically limited.

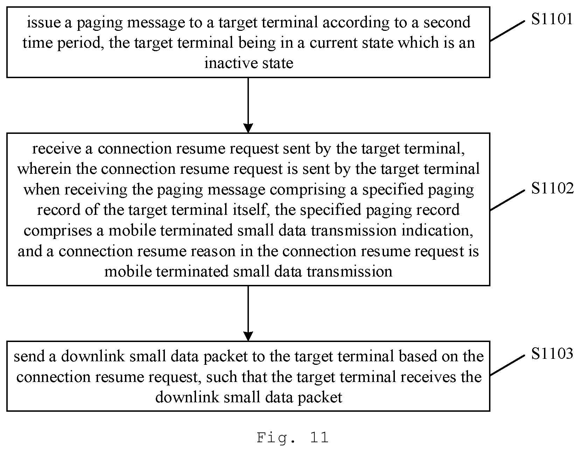

Based on the same inventive concept, according to the above data transmission method provided by embodiments of the present disclosure, the present disclosure also provides a data transmission method. As shown in Fig. 11, Fig. 11 is a tenth schematic flowchart of a data transmission method provided by embodiments of the present disclosure. The method is applied to a target network device, and specifically comprises the following steps.

At step S1101, a paging message is sent to a target terminal in a current state which is an inactive state according to a second time period.

In this step, the target network device may send the paging message to a terminal in a connected state or an inactive state within the target network device's network coverage according to a second time period. At this time, the terminal(s) within the network coverage of the target network device will receive the paging message. That is, the above target terminal will receive the paging message.

In the embodiments of the present disclosure, the above paging message may be sent in the form of multicast/broadcast or the like. Here, the method of sending the above paging message is not specifically limited.

In some embodiments, the above paging message may comprise a paging record list. The paging record list is a list for recording a terminal that is paged, and the paging record list comprises at least one paging record.

In some embodiments, the above paging record comprises at least one of a terminal identity of the paged terminal, an access type, or a mobile terminated small data transmission indication.

For example, the paging record may comprise the terminal identity of the paged terminal, the access type, or the mobile terminated small data transmission indication. For another example, the paging record may comprise the terminal identity of the paged terminal and the access type, or the terminal identity of the paged terminal and the mobile terminated small data transmission indication, or the access type and the mobile terminated small data transmission indication. For still another example, the paging record may comprise the terminal identity of the paged terminal, the access type, and the mobile terminated small data transmission indication.

The terminal identity comprises: a NAS ID assigned by NAS to the terminal for core network paging and a complete inactive state terminal identity for RAN paging. The above access type is used to indicate whether the paging message is initiated by a PDU session that is not accessed by 3GPP. The mobile terminated small data transmission indication is used to indicate that the paging message is used to trigger the mobile terminated small data transmission.

In some embodiments, the above paging record may further comprise a contention free access preamble that indicates the terminal to initiate contention free random access.

At step S1102, a connection resume request sent by the target terminal is received. The connection resume request is sent by the target terminal when the paging message comprising a specified paging record of the target terminal itself is received. The specified paging record comprises the mobile terminated small data transmission indication. The connection resume reason in the connection resume request is mobile terminated small data transmission.

In this step, after the target network device sends the above paging message to the target terminal, the target terminal sends the connection resume request with the connection resume reason of mobile terminated small data transmission to the target network device when the paging message comprises the specified paging record of the target terminal itself. The target network device will receive the connection resume request.

The above specified paging record comprises the mobile terminated small data transmission indication. For the description of the specified paging record, reference may be made to the above description, which will not be specifically explained in detail here.

At step S1103, a downlink small data packet is sent to the target terminal based on the connection resume request, such that the target terminal receives the downlink small data packet.

In this step, after the target network device receives the connection resume request sent by the target terminal, since the connection resume reason in the connection resume request is mobile terminated small data transmission, the target network device may obtain the downlink small data packet based on the connection resume reason and send the downlink small data packet to the target terminal. For the description of the downlink small data packet, reference may be made to the above description, which will not be specifically explained in detail here.

In some embodiments, the above connection resume request may be a first connection resume request or a second connection resume request. The first connection resume request is sent by the target terminal when SIB1 sent by a base station indicates that the connection resume request uses a full resume identifier, and the second connection resume request is sent by the target terminal when SIB1 sent by a base station does not indicate that the connection resume request uses a full resume identifier.

The above first connection resume request and second connection resume request each comprises: a resume identifier, a resume integrity check code, and a connection resume reason.

The resume identifier of the first connection resume request is a complete inactive state terminal identity stored by the target terminal, and the resume identifier of the second connection request is a truncated inactive state terminal identity stored by the target terminal. The complete inactive state terminal identity and the truncated inactive state terminal identity are wireless network temporary identifier values of a terminal in the inactive state, and are used for a target network side to find an anchor point before the terminal enters the inactive state and the access layer context information stored by the anchor point. The complete inactive state terminal identity and the truncated inactive state terminal identity have different sizes. The resume integrity check code is an identity authentication token for terminal identity authentication at the base station.

In the above first connection resume request and second connection resume request, the resume identifier is a UE identifier for promoting UE context information retrieval at gNB, for example, resumeIdentify of RRCResumeRequest1 in the relevant standard TS38.331. The above resume integrity check code is a bit string, which is an authentication token for UE authentication at gNB, for example, resume MAC-I in the relevant standard TS38.331. The above resume reason is a resume reason provided by the upper layer or RRC and added in the first connection resume request. When UE uses an unknown reason value (for example, MT-SDT in the embodiments of the present disclosure), gNB will not reject the first connection resume request according to relevant standards such as resumeCause in TS38.331.

By way of the method shown in Fig. 11, when a target terminal is in the inactive state, if the target terminal receives a paging message comprising a specified paging record of the target terminal itself issued by the target network device, a connection resume request may be sent to the target network device, so as to trigger small data transmission process between the target terminal and the target network device when the terminal is in the inactive state. At this time, the target network device may send a downlink small data packet to the target terminal based on the received connection resume request, and the target terminal will also receive the downlink small data packet, thereby realizing a downlink small data packet transmission process of a terminal in the inactive state.

Furthermore, compared with the related art in which the terminal in the inactive state has to switch to the connected state for data transmission, in the embodiments of the present disclosure, a new terminal access type, i.e. mobile terminated small data transmission, is introduced through a mobile terminated small data transmission indication in a specified paging record, such that the terminal may receive the downlink small data packet sent by the target network device when the terminal is in the inactive state. The signaling overhead and the delay consumption caused by switching from the inactive state to the connected state are avoided, the transmission efficiency of the downlink small data packet is improved, and the signaling overhead of the downlink small data packet is saved, which effectively reduces the signaling overhead and the delay consumption during the data transmission process.

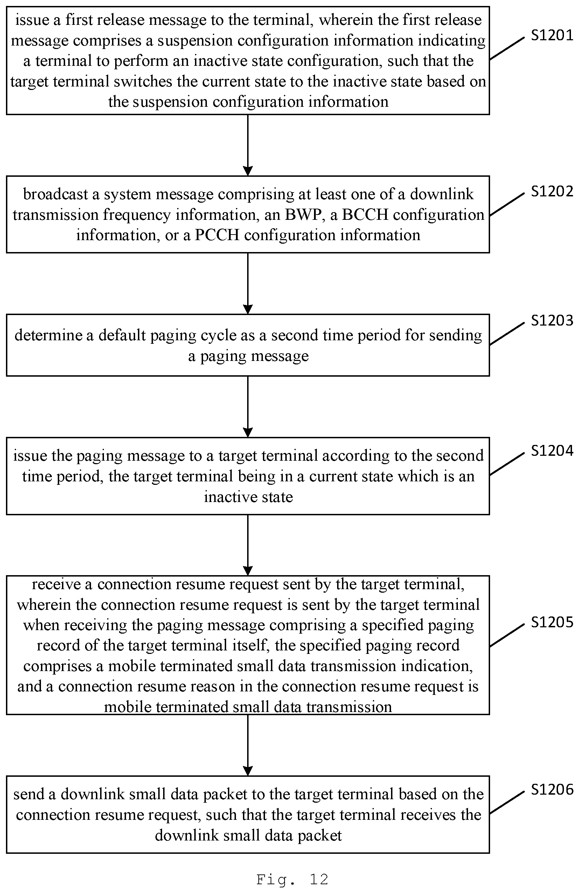

In some embodiments, according to the above method shown in Fig. 11, the embodiments of the present disclosure also provide a data transmission method. As shown in Fig. 12, Fig. 12 is an eleventh schematic flowchart of a data transmission method provided by embodiments of the present disclosure. The method comprises the following steps.

At step S1201, a first release message is issued to the terminal. The first release message comprises suspension configuration information indicating the terminal to perform an inactive state configuration, such that the target terminal switches the current state to the inactive state based on the suspension configuration information.

In this step, the target network device may send a RRC release message (i.e., the above first release message) to the target terminal in a connected state. The first release message comprises suspension configuration information indicating the terminal to perform the inactive state configuration. After receiving the first release message, the target terminal may switch a state according to the suspension configuration information in the first release message, that is, switching the current state from the connected state to the inactive state.

The above suspension configuration information comprises: a complete inactive state terminal identity, a truncated inactive state terminal identity, a radio paging cycle, radio notification area information, a timer, a next hop chaining count value and configuration information of mobile terminated small data transmission.

The above complete inactive state terminal identity and truncated inactive state terminal identity are wireless network temporary identifier values of a terminal in the inactive state, and are used for the target network side to find an anchor point node before the terminal enters an inactive state and the access layer context information stored by the anchor point node. The complete inactive state terminal identity and the truncated inactive state terminal identity have different sizes.

The radio paging cycle is a RAN paging cycle configured by the RAN side node for the terminal in the inactive state.

The radio notification area information comprises a cell list and a radio area configuration list. The cell list is a list of cells configured in RAN area, and the radio area configuration list comprises a RAN area code or a RA code of the RAN area.

The timer is used to trigger a periodic RNAU process in the terminal.

The next hop chaining count value is used to calculate a security key after connection is resumed.

The configuration information of mobile terminated small data transmission comprises at least one of a DRB list of small data transmission or a SRB2 indication of small data transmission. The DRB list of small data transmission indicates a DRB identifier of the small data transmission configuration, and the SRB2 indication of small data transmission is used for indicating presence or absence of SRB2 of the small data transmission configuration of the terminal. For example, the configuration information of mobile terminated small data transmission comprises the DRB list of small data transmission or the SRB2 indication of small data transmission. For another example, the configuration information of mobile terminated small data transmission comprises the DRB list of small data transmission and the SRB2 indication of small data transmission.

In some embodiments, the above configuration information of mobile terminated small data transmission may further comprise CG configuration information. The CG configuration grant information comprises: a CG SSB RSRP threshold, a CG timing advance timer, a CG timing advance verification configuration and a CG RSRP variation threshold.

The CG SSB RSRP threshold is a RSRP threshold selected by SSB performing small data transmission based on CG resource. The CG timing advance timer is used for timing synchronization of small data transmission. The CG timing advance verification configuration is used for a configuration of TA verification based on RSRP. The CG RSRP variation threshold is a RSRP threshold for TA verification of small data transmission.

By way of the above step S1201, the target terminal may switch the current state from the connected state to the inactive state according to the first release message issued by the target network device, which facilitates that the target terminal may rapidly enter the connected state, and also facilitates process of a small data transmission in the inactive state when a specified paging record of the target terminal is received later, thereby reducing the signaling overhead and the delay consumption during the data transmission process.

At step S1202, a system message is broadcast. The system message comprises at least one of a downlink transmission frequency information, an initial downlink BWP, a BCCH configuration information and a PCCH configuration information.

For example, the system message may comprise the downlink transmission frequency information, the initial downlink BWP, the BCCH configuration information or the PCCH configuration information. For another example, the system message may comprise the downlink transmission frequency information and the initial downlink BWP, or the BCCH configuration information and the PCCH configuration information, or the downlink transmission frequency information and the BCCH configuration information, or the downlink transmission frequency information and the PCCH configuration information, or the initial downlink BWP and the BCCH configuration information, or the initial downlink BWP and the PCCH configuration information. For still another example, the system message may comprise the downlink transmission frequency information, the initial downlink BWP and the BCCH configuration information, or the initial downlink BWP, the BCCH configuration information and the PCCH configuration information, or the downlink transmission frequency information, the BCCH configuration information and the PCCH configuration information, or the downlink transmission frequency information, the initial downlink BWP and the PCCH configuration information. For yet still another example, the system message comprises the downlink transmission frequency information, the initial downlink BWP, the BCCH configuration information and the PCCH configuration information.

In this step, the target network device may broadcast a system message within its network coverage. At this time, all the terminals within the network coverage of the target network device will receive the system message. That is, the above target terminal will receive the system message.

In some embodiments, the above downlink transmission frequency information is used to indicate a transmission frequency of the downlink small data packet. The initial downlink BWP is an initial downlink BWP configuration of the primary cell. The BCCH configuration information is a configuration related to modifying a passing cycle of the system message. The PDCCH configuration information comprises a default paging cycle, a paging frame number and configuration, the number of paging occasions and a first PDCCH monitoring occasion.

The default paging cycle is a default paging cycle broadcast in the system message. The paging frame number and configuration is used to derive a total number of paging frames and a paging frame offset. The number of paging occasions is used to indicate the number of paging occasions in each paging frame. The paging occasions are a group of PDCCH monitoring occasions consisting of a plurality of time slots for sending a paging control information. The first PDCCH monitoring occasion is a first PDCCH monitoring occasion indicating to monitor a paging occasion of a paging frame.

In the embodiments of the present disclosure, the sequence of performing the above step S1201 and step S1202 is not specifically limited.

At step S1203, the default paging cycle is determined as a second time period for sending a paging message.

In the embodiments of the present disclosure, the second time period for sending the paging message by the target network device may be a radio paging period comprised in the first release message.

At step S1204, the paging message is sent to the target terminal in a current state which is an inactive state according to the second time period.

At step S1205, a connection resume request sent by the target terminal is received. The connection resume request is sent by the target terminal when the paging message comprising a specified paging record of the target terminal itself is received. The specified paging record comprises a mobile terminated small data transmission indication. The connection resume reason in the connection resume request is mobile terminated small data transmission.

At step S1206, a downlink small data packet is sent to the target terminal based on the connection resume request, such that the target terminal receives the downlink small data packet.

The above steps S1204 to s1206 are the same as the above steps S1101 to S1103.

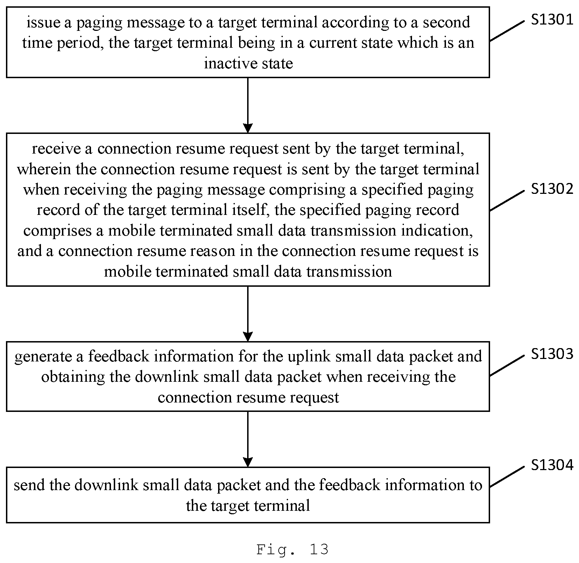

In some embodiments, the above connection resume request may also comprise an uplink small data packet. When the above connection resume request comprises an uplink small data packet, according to the above method shown in Fig. 11, the embodiments of the present disclosure also provide a data transmission method. As shown in Fig. 13, Fig. 13 is a twelfth schematic flowchart of a data transmission method provided by embodiments of the present disclosure. The method comprises the following steps.

At step S1301, a paging message is sent to a target terminal in a current state which is an inactive state according to a second time period.

The above step S1301 is the same as the above step S1101.

At step S1302, a connection resume request sent by the target terminal is received. The connection resume request is sent by the target terminal when the paging message comprising a specified paging record of the target terminal itself is received. The specified paging record comprises a mobile terminated small data transmission indication. The connection resume reason in the connection resume request is mobile terminated small data transmission.

In the above step S1302, the connection resume request sent by the target terminal to the target network device may further comprise an uplink small data packet. The uplink small data packet is a data packet corresponding to uplink data sent by the target terminal to the target network device or a plurality of sub-packets obtained by splitting the uplink data.

At step S1303, when the connection resume request is received, the feedback information for the uplink small data packet is generated and a downlink small data packet is obtained.

At step S1304, the downlink small data packet and the feedback information are sent to the target terminal.

In the embodiments of the present disclosure, the uplink small data packet is added in the above connection resume request, such that the downlink small data packet transmission is completed whilst performing the uplink small data packet transmission, thereby improving the data transmission efficiency.

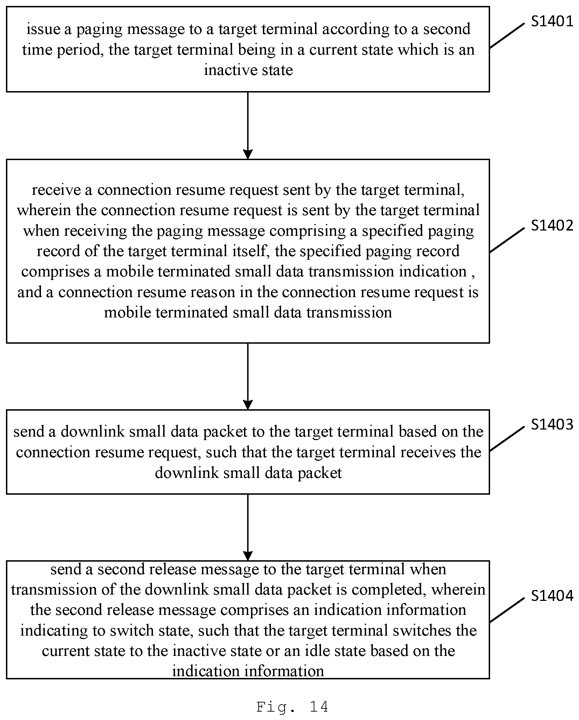

In some embodiments, according to the above method shown in Fig. 11, the embodiments of the present disclosure also provide a data transmission method. As shown in Fig. 14, Fig. 14 is a thirteenth schematic flowchart of a data transmission method provided by embodiments of the present disclosure. The method comprises the following steps.

At step S1401, a paging message is sent to a target terminal in a current state which is an inactive state according to a second time period.

At step S1402, a connection resume request sent by the target terminal is received. The connection resume request is sent by the target terminal when the paging message comprising a specified paging record of the target terminal itself is received. The specified paging record comprises a mobile terminated small data transmission indication. The connection resume reason in the connection resume request is mobile terminated small data transmission.

At step S1403, a downlink small data packet is sent to the target terminal based on the connection resume request, such that the target terminal receives the downlink small data packet.

The above steps S1401 to S1403 are the same as the above steps S1101 to S1103.

At step S1404, when the downlink small data packet transmission is completed, a second release message is sent to the target terminal. The second release message comprises indication information indicating to switch state, such that the target terminal switches the current state to the inactive state, or the idle state based on the indication information.

In this step, after sending the downlink small data packet to the target terminal, the target network device may send a second release message, which comprises indication information for indicating the terminal to perform state switching, to the target terminal. When receiving the second release message, the target terminal may switch the current state to the inactive state or the idle state according to the indication information in the second release message.

By sending the above second release message, the state of the target terminal may be switched to the inactive state or the idle state in time after the mobile terminated small data transmission is completed.

In some embodiments, in order to further reduce the signaling overhead during the process of mobile terminated small data transmission, when the above target network device sends a downlink small data packet to the target terminal, if the number of downlink small data packets is more than one, when the last downlink small data packet is sent, the target network device may add the last downlink small data packet in the second release message and send the last downlink small data packet together with the second release message to the target terminal, in a case where the sum of the data amount of the last downlink small data packet and the data amount of the above second release message is less than the bearing capacity of the radio channel.

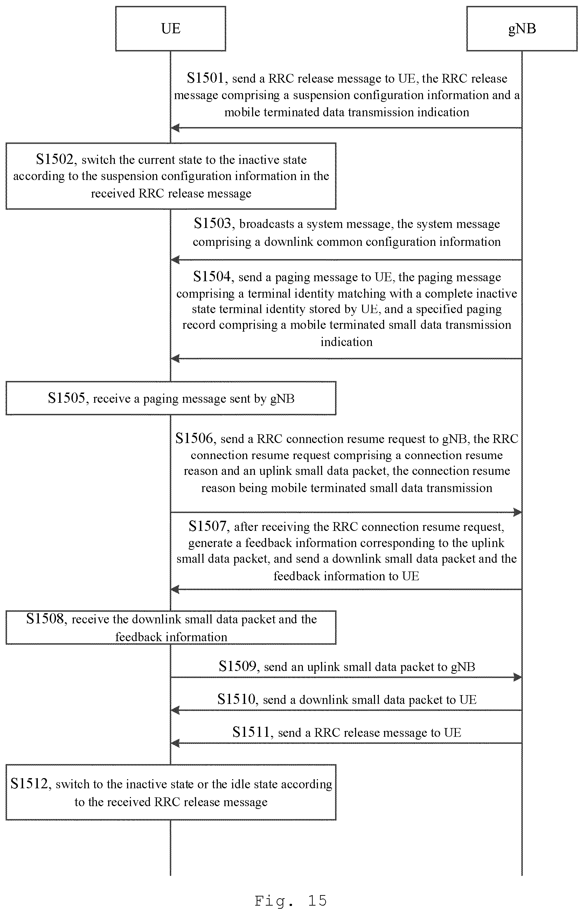

For the convenience of understanding, the above process of small data transmission in the inactive state will be explained in conjunction with Fig. 15. Fig. 15 is a signaling diagram of process of data transmission in an inactive state provided by embodiments of the present disclosure.

At step S1501, gNB sends a RRC release message to UE. The RRC release message comprises a suspension configuration information and a mobile terminated small data transmission indication.

The current state of the above UE is a connected state. The above suspension configuration information comprises a radio paging cycle. The above suspension configuration information may also comprise a CG configuration information.

At step S1502, UE switches the current state to the inactive state according to the suspension configuration information in the received RRC release message.

At step S1503, gNB broadcasts a system message. The system message comprises a downlink common configuration information.

The above downlink common configuration information comprises the downlink transmission frequency information, the initial downlink BWP, the BCCH configuration information and the PCCH configuration information. The PCCH configuration information comprises information such as a default paging cycle.

At step S1504, gNB sends a paging message to UE. The paging message comprises a terminal identity matching with a complete inactive state terminal identity stored by UE, and a specified paging record comprising a mobile terminated small data transmission indication.

In this step, gNB sends the above paging message to UE with the above radio paging cycle as a time cycle. In addition, the above specified paging record may also comprise a contention free access preamble.

At step S1505, UE receives a paging message sent by gNB.

In this step, UE receives the paging message sent by the target network device with a smaller value of the above radio paging cycle and default paging cycle as a time cycle.

At step S1506, UE sends a RRC connection resume request to gNB. The RRC connection resume request comprises a connection resume reason and an uplink small data packet. The connection resume reason is mobile terminated small data transmission.

The above RRC connection resume request also comprises a value indicating an access type, for example, the above access type N.

According to whether the above RRC release message comprises a CG configuration information and whether the paging message comprises a contention free access preamble, UE may send the above RRC connection resume request in a random access manner or in a configured grant type matched with CG configuration.

In the above Step S1506, when the target terminal does not have uplink data to send to the target network device, the above RRC connection resume request will not comprise the above uplink small data packet.

At step S1507, after receiving the RRC connection resume request, gNB generates a feedback information corresponding to the uplink small data packet, and sends a downlink small data packet and the feedback information to UE.

At step S1508, UE receives the downlink small data packet and the feedback information.

At step S1509, UE sends an uplink small data packet to gNB.

In this step, when there is a plurality of uplink small packets corresponding to the uplink data, UE will continue to send the remaining unsent uplink small packets to gNB after receiving the above feedback information.

At step S1510, gNB sends a downlink small data packet to UE.

In this step, when there is a plurality of downlink small data packets corresponding to downlink data, gNB may continue to send a downlink small data packet to UE after performing the above step S1058.

At step S1511, gNB sends a RRC release message to UE.

The above RRC release message comprises indication information indicating that a state is switched.

When there is a plurality of downlink small data packets corresponding to the above downlink data, the above RRC release message may also comprise a last downlink small data packet corresponding to the downlink data.

The uplink small data packet/downlink small data packet in the above steps S1509 to S1511 is a sub-packet corresponding to the remaining uplink data/downlink data that has not been sent after the sending process of the first uplink small data packet/downlink small data packet. The above steps S1509 and S1510 may be performed for multiple times, and only one small data packet is transmitted at a time.

At step S1512, UE switches to the inactive state or the idle state according to the received RRC release message.

In this step, the state of UE after switching will also vary according to different indication information in the RRC release message.

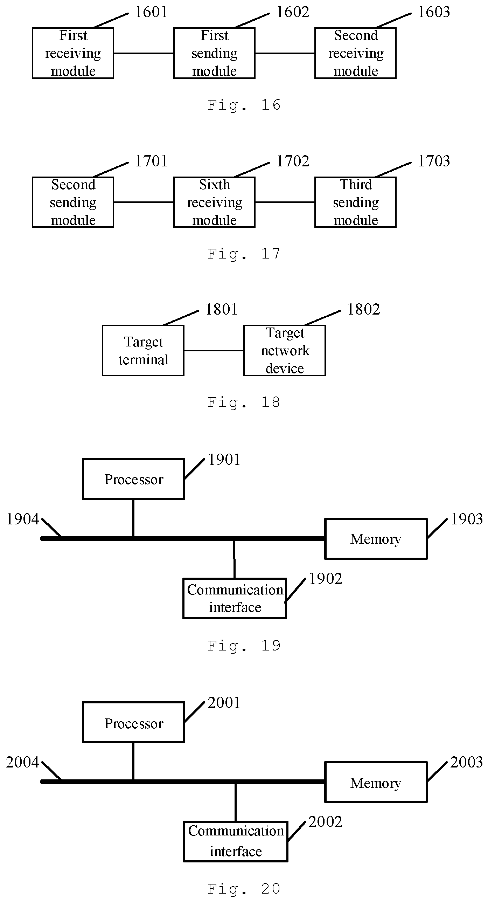

Based on the same inventive concept, according to the above data transmission method provided by embodiments of the present disclosure, the embodiments of the present disclosure also provide a data transmission apparatus. As shown in Fig. 16, Fig. 16 is a first schematic structural view showing a data transmission apparatus provided by embodiments of the present disclosure. The data transmission apparatus is applied to a target terminal, and specifically comprises the following modules.

The first receiving module 1601 is used for receiving a paging message issued by a target network device according to a first time period when a current state of the target terminal is an inactive state.

The first sending module 1602 is used for sending a connection resume request to the target network device when the paging message received comprises a specified paging record of the target terminal, such that the target network device sends a downlink small data packet to the target terminal based on the connection resume request received, wherein the specified paging record comprises a mobile terminated small data transmission indication, and a connection resume reason in the connection resume request is mobile terminated small data transmission.

The second receiving module 1603 is used for receiving the downlink small data packet sent by the target network device.

In some embodiments, the above paging message comprises a paging record list which is a list for recording a terminal that is paged, the paging record list comprising at least one paging record.

In some embodiments, the paging record comprises at least one of a terminal identity of the terminal that is paged, an access type or the mobile terminated small data transmission indication. The terminal identity comprises a NAS ID for core network paging assigned by NAS to the terminal, and a complete inactive state terminal identity for RAN paging; the access type is used to indicate whether the paging message is a paging message initiated by a PDU session that is not accessed by a 3GPP; and the mobile terminated small data transmission indication is used to indicate that the paging message is used to trigger mobile terminated small data transmission.

In some embodiments, the paging record further comprises a contention free access preamble indicating the terminal to initiate contention free random access.

In some embodiments, the data transmission apparatus may further comprise: a parsing module for parsing each paging record in the paging message received after receiving the paging message issued by the target network device according to the first time period; a first determining module for determining, for each paging record obtained by parsing, that this paging record is the specified paging record of the target terminal, if the complete inactive state terminal identity in this paging record matches with a complete inactive state terminal identity stored by the target terminal, and this paging record comprises the mobile terminated small data transmission indication; and a second determining module for determining that this paging record is not the specified paging record of the target terminal, if the complete inactive state terminal identity in this paging record does not match with the complete inactive state terminal identity stored by the terminal, and/or this paging record does not comprise the mobile terminated small data transmission indication.

In some embodiments, the above first sending module 1602 may be specifically used for, if the target terminal stores a configured grant (CG) configuration information, sending the connection resume request to the target network device based on the CG configuration information when the paging message received comprises the specified paging record of the target terminal.

In some embodiments, the above first sending module 1602 may be specifically used for, if the target terminal does not store a configured grant (CG) configuration information, sending the connection resume request to the target network device in a contention access manner when the paging message received comprises the specified paging record of the target terminal, and the specified paging record does not comprise a contention free access preamble; and sending the connection resume request to the target network device in a contention free access manner when the paging message received comprises the specified paging record of the target terminal and the specified paging record comprises the contention free access preamble.

In some embodiments, the above data transmission apparatus may further comprise: a judging module for judging whether the target terminal satisfies a preset connection initiating condition at a current moment before sending the connection resume request to the target network device, wherein the preset connection initiating condition is that the mobile terminated small data transmission indication is received, or the preset connection initiating condition is that the mobile terminated small data transmission indication is received, and a downlink reference signal receiving power (RSRP) is greater than a preset threshold; and a performing module for performing the step of sending the connection resume request to the target network device when the target terminal satisfies the preset connection initiating condition.

In some embodiments, the above data transmission apparatus further comprises: a performing module for sending another connection resume request in a case where another preset connection initiating condition is satisfied, such that the target terminal sends an uplink data packet to the target network device after a connection corresponding to the another connection resume request is resumed, wherein the another preset connection initiating condition is that data amount of radio bearer configured for mobile originated small data transmission is less than a preset data amount threshold, or the another preset connection initiating condition is that the data amount of the radio bearer configured for mobile originated small data transmission is less than the preset data amount threshold and uplink small data transmission resource is effective.

In some embodiments, the above preset connection initiating condition may be expressed as: the mobile terminated small data transmission indication is received; or the mobile terminated small data transmission indication is received, and a lower layer below a radio resource control (RRC) layer indicates that triggering condition of small data transmission is satisfied.

In some embodiments, another preset connection initiating condition is expressed as: an upper layer above a radio resource control (RRC) layer requires resuming RRC connection, SIB1 contains common configuration of small data transmission, small data transmission configuration is configured, all the uplink small data is mapped to radio bearers of the small data transmission configuration, and a lower layer below the RRC layer indicates that triggering condition of small data transmission is satisfied.

In some embodiments, the above data transmission apparatus may further comprise: a first starting module for starting a timer for detecting resume process of small data transmission in the inactive state when the target terminal satisfies the preset connection initiating condition.

The above data transmission apparatus may further comprise: a second starting module for starting a timer for monitoring resume process of inactive state and sending a timeout indication to MAC entity when the target terminal does not satisfy the preset connection initiating condition, wherein the timeout indication is used to indicate timeout of a configured grant (CG) timing advance timer in a CG configuration information of small data transmission.

In some embodiments, the above data transmission apparatus may further comprise: a release module for releasing a configured grant (CG) configuration information that is stored if the target terminal moves from a current radio access network (RAN) cell to other RAN cell(s) and initiates a connection resume process in the other RAN cell(s).

In some embodiments, the above connection resume request is a first connection resume request or a second connection resume request.

The above first sending module 1602 may be specifically used for selecting the first connection resume request as the connection resume request when a SIB1 sent by a base station indicates that the connection resume request uses a full resume identifier, or selecting the second connection resume request as the connection resume request when the SIB1 received does not indicate use of the full resume identifier; resuming a preset security information from an access layer context information that is stored, wherein the preset security information comprises: a radio resource control (RRC) configuration, a robust header compression (ROHC) state, a stored mapping relationship between quality of service (QoS) flow and data resource bearer (DRB), a base station root key and an integrity protection key; reconstructing a packet data convergence protocol (PDCP) entity for the SIB1; resuming the SIB1; for each radio bearer configured for mobile terminated small data transmission, resuming a configuration associated with a primary cell group and radio link layer control protocol (RLC) bearer of PDCP configuration from the access layer context information, and reconstructing a PDCP entity for this radio bearer; resuming all the radio bearers configured for mobile terminated small data transmission; and sending the connection resume request to the target network device.

In some embodiments, the above first connection resume request and the second connection resume request each comprises: a resume identifier, a resume integrity check code, and the connection resume reason, wherein: the resume identifier of the first connection resume request is a complete inactive state terminal identity stored by the target terminal, and the resume identifier of the second connection request is a truncated inactive state terminal identity stored by the target terminal, the complete inactive state terminal identity and the truncated inactive state terminal identity are wireless network temporary identifier values of a terminal in the inactive state, and used for a target network side to find an anchor point before the terminal enters the inactive state and the access layer context information stored by the anchor point, and the complete inactive state terminal identity and the truncated inactive state terminal identity have different sizes; and the resume integrity check code is an identity authentication token for terminal identity authentication at the base station.

In some embodiments, the above data transmission apparatus may further comprise: a third receiving module for receiving a first release message issued by the target network device when the current state of the target terminal is a connected state, wherein the first release message comprises a suspension configuration information indicating a terminal to perform an inactive state configuration; and a first switching module for switching the current state to the inactive state based on the suspension configuration information.

In some embodiments, the above suspension configuration information may comprise: a complete inactive state terminal identity, a truncated inactive state terminal identity, a radio paging cycle, a radio notification area information, a timer, a next hop chaining count value and a configuration information of mobile terminated small data transmission.

In some embodiments, the above complete inactive state terminal identity and the truncated inactive state terminal identity are wireless network temporary identifier values of a terminal in the inactive state, and are used for a target network side to find an anchor point node before the terminal enters the inactive state and an access layer context information stored by the anchor point node, and the complete inactive state terminal identity and the truncated inactive state terminal identity have different sizes.

The above radio paging cycle is a RAN paging cycle configured by a radio access network (RAN) side node for the terminal in the inactive state.

The above radio notification area information comprises a cell list and a radio area configuration list, wherein the cell list is a list of cells configured in RAN area, and the radio area configuration list comprises a RAN area code or a random access (RA) code of the RAN area.

The above timer is used to trigger a periodic RAN-based notification area update (RNAU) process in the terminal.

The above next hop chaining count value is used to calculate a security key after connection is resumed.

The above configuration information of mobile terminated small data transmission comprises: at least one of a data resource bearer (DRB) list of small data transmission or a signaling radio bearer 2 (SRB2) indication of small data transmission, wherein the DRB list of small data transmission indicates a DRB identifier of small data transmission configuration, and the SRB2 indication of small data transmission indicates presence or absence of SRB2 of small data transmission configuration of the terminal.

In some embodiments, the above configuration information of mobile terminated small data transmission further comprises a configured grant (CG) configuration grant information, wherein the CG configuration information comprises a CG SSB RSRP threshold, a CG timing advance timer, a CG timing advance verification configuration and a CG RSRP variation threshold.

The above CG SSB RSRP threshold is a reference signal receiving power (RSRP) threshold selected by SSB performing small data transmission based on CG resource.

The above CG timing advance timer is used for timing synchronization of small data transmission.

The above CG timing advance verification configuration is used for a configuration of timing advance (TA) verification based on RSRP.

The above CG RSRP variation threshold is a RSRP threshold for TA verification of small data transmission.

In some embodiments, In some embodiments, the first switching module is specifically used for: resetting media access control (MAC) and releasing a default MAC cell group configuration; applying the suspension configuration information; determining each DRB in a DRB list of small data transmission and a SRB2 indication of small data transmission as DRB and SRB2 during process of small data transmission when the suspension configuration information comprises a CG configuration information, reconstructing a RLC entity for each radio link layer control protocol (RLC) bearer in target terminal configuration, triggering a packet data convergence protocol (PDCP) entity to perform a session data unit (SDU) discarding process for resumed SRB2 and SRB1, configuring CG resource of small data transmission for a MAC entity, and indicating to start a CG timing advance timer; storing a current access layer root key (KgNB) and an integrity protection key (KRRCint) of radio resource control (RRC) signaling, a robust header compression (ROHC) state, a stored mapping rule between quality of service (QoS) flow and data resource bearer (DRB), a cell wireless network temporary identifier (C-RNTI) used in a source primary cell (PCell), a cell identifier and a physical cell identifier of the source PCell, a special cell (SpCell) common configuration in a synchronous reconfiguration message of a new radio primary secondary cell (NR PSCell), and all the other configuration parameters than parameters in a synchronization reconfiguration message of the PCell, parameters in the synchronization reconfiguration message of the NR PSCell, mobility control information of a secondary cell group (SCG) of E-UTRA PSCell, a primary secondary cell (PSCell) configuration in EN-DC and a service cell common configuration SIB in an access layer context information of a terminal in the inactive state; suspending all SRBs except SRB0 and DRBs; indicating a lower layer of all DRBs to perform PDCP suspension, wherein the lower layer is below a RRC layer; and switching to the inactive state and performing cell reselection.

In some embodiments, the above data transmission apparatus may further comprise: a fourth receiving module for receiving a system message broadcast by the target network device, wherein the system message comprises at least one of a downlink transmission frequency information, an initial downlink bandwidth part (BWP), a broadcast control channel (BCCH) configuration information, or a paging channel (PCCH) configuration information.

In some embodiments, the above downlink transmission frequency information is used to indicate a transmission frequency of the downlink small data packet.

The above initial downlink BWP is an initial downlink BWP configuration of a primary cell.

The above BCCH configuration information is a configuration related to modifying a passing cycle of the system message.

The above PDCCH configuration information comprises a default paging cycle, a paging frame number and configuration, a number of paging occasions and a first physical downlink control channel (PDCCH) monitoring occasion, wherein the default paging cycle is a default paging cycle broadcast in the system message, the paging frame number and configuration is used to derive a total number of paging frames and a paging frame offset, the number of paging occasions is used to indicate a number of paging occasions in each paging frame, the paging occasions are a group of PDCCH monitoring occasions consisting of a plurality of time slots for sending a paging control information, and the first PDCCH monitoring occasion is a first PDCCH monitoring occasion for indicating to monitor a paging occasion of a paging frame.

In some embodiments, the above data transmission apparatus may further comprise: a third determining module for determining a smaller value of a radio paging cycle and the default paging cycle as the first time period for receiving the paging message when the target terminal is in the inactive state, wherein the radio paging cycle is a RAN paging cycle configured by a wireless access network (RAN) side node for a terminal in the inactive state.

In some embodiments, the above connection resume request also comprises an uplink small data packet.

The above second receiving module 1603 may be specifically used for receiving the downlink small data packet sent by the target network device and a feedback information sent by the target network device for the uplink small data packet.

In some embodiments, the above data transmission apparatus may further comprise: a fifth receiving module for receiving a second release message sent by the target network device when transmission of the downlink small data packet is completed, wherein the second release message comprises an indication information indicating to switch state; and a second switching module for switching the current state to the inactive state or an idle state based on the indication information.

Based on the same inventive concept, according to the above data transmission method provided by embodiments of the present disclosure, the embodiments of the present disclosure also provide a data transmission apparatus. As shown in Fig. 17, Fig. 17 is a second schematic structural view showing a data transmission apparatus provided by embodiments of the present disclosure. The data transmission apparatus is applied to the target network device, and specifically comprises the following modules: a second sending module 1701 for issuing a paging message to a target terminal according to a second time period, the target terminal being in a current state which is an inactive state; a sixth receiving module 1702 for receiving a connection resume request sent by the target terminal, wherein the connection resume request is sent by the target terminal when receiving the paging message comprising a specified paging record of the target terminal itself, the specified paging record comprises a mobile terminated small data transmission indication, and a connection resume reason in the connection resume request is mobile terminated small data transmission; and a third sending module 1703 for sending a downlink small data packet to the target terminal based on the connection resume request, such that the target terminal receives the downlink small data packet.

In some embodiments, the above paging message comprises a paging record list which is a list for recording a terminal that is paged, the paging record list comprising at least one paging record.

In some embodiments, the above paging record comprises at least one of a terminal identity of the terminal that is paged, an access type or the mobile terminated small data transmission indication.

The above terminal identity comprises a NAS ID for core network paging assigned by NAS to the terminal, and a complete inactive state terminal identity for RAN paging. The access type is used to indicate whether the paging message is a paging message initiated by a PDU session that is not accessed by 3GPP. The mobile terminated small data transmission indication is used to indicate that the paging message is used to trigger mobile terminated small data transmission.

In some embodiments, the above paging record further comprises a contention free access preamble indicating the terminal to initiate contention free random access.

In some embodiments, the above connection resume request is a first connection resume request or a second connection resume request, the first connection resume request is sent by the target terminal when SIB1 sent by a base station indicates that the connection resume request uses a full resume identifier, and the second connection resume request is sent by the target terminal when the SIB1 sent by the base station does not indicate that the connection resume request uses a full resume identifier.

In some embodiments, the above first connection resume request and second connection resume request each comprises: a resume identifier, a resume integrity check code, and the connection resume reason.

The resume identifier of the first connection resume request is a complete inactive state terminal identity stored by the target terminal, and the resume identifier of the second connection request is a truncated inactive state terminal identity stored by the target terminal. The complete inactive state terminal identity and the truncated inactive state terminal identity are wireless network temporary identifier values of a terminal in the inactive state, and used for a target network side to find an anchor point before the terminal enters the inactive state and the access layer context information stored by the anchor point. The complete inactive state terminal identity and the truncated inactive state terminal identity have different sizes. The resume integrity check code is an identity authentication token for terminal identity authentication at the base station.

In some embodiments, the above data transmission apparatus may further comprise: a fourth sending module for issuing a first release message to the terminal, wherein the first release message comprises a suspension configuration information indicating the terminal to perform an inactive state configuration, such that the target terminal switches the current state to the inactive state based on the suspension configuration information.

In some embodiments, the above suspension configuration information comprises a complete inactive state terminal identity, a truncated inactive state terminal identity, a radio paging cycle, a radio notification area information, a timer, a next hop chaining count value and a configuration information of mobile terminated small data transmission.

In some embodiments, the above complete inactive state terminal identity and the truncated inactive state terminal identity are wireless network temporary identifier values of a terminal in the inactive state, and are used for a target network side to find an anchor point node before the terminal enters the inactive state and an access layer context information stored by the anchor point node, and the complete inactive state terminal identity and the truncated inactive state terminal identity have different sizes.

The above radio paging cycle is a RAN paging cycle configured by the RAN side node for the terminal in the inactive state.

The above radio notification area information comprises a cell list and a radio area configuration list, wherein the cell list is a list of cells configured in RAN area, and the radio area configuration list comprises a RAN area code or a RA code of the RAN area.

The above timer is used to trigger a periodic RNAU process in the terminal.

The above next hop chaining count value is used to calculate a security key after connection is resumed.

The above configuration information of mobile terminated small data transmission comprises at least one of a data resource bearer (DRB) list of small data transmission or a signaling radio bearer 2 (SRB2) indication of small data transmission, wherein the DRB list of small data transmission indicates a DRB identifier of small data transmission configuration, and the SRB2 indication of small data transmission indicates presence or absence of SRB2 of small data transmission configuration of the terminal.

In some embodiments, the above configuration information of mobile terminated small data transmission further comprises a configured grant (CG) configuration grant information, wherein the CG configuration information comprises a CG SSB RSRP threshold, a CG timing advance timer, a CG timing advance verification configuration and a CG RSRP variation threshold.

The above CG SSB RSRP threshold is a RSRP threshold selected by SSB performing small data transmission based on CG resource.

The above CG timing advance timer is used for timing synchronization of small data transmission.

The above CG timing advance verification configuration is used for a configuration of TA verification based on RSRP.

The above CG RSRP variation threshold is a RSRP threshold for TA verification of small data transmission.

In some embodiments, the above data transmission apparatus may further comprise: a broadcast module used for broadcasting a system message. The system message comprises at least one of a downlink transmission frequency information, an initial downlink BWP, a BCCH configuration information or a PCCH configuration information.

In some embodiments, the above downlink transmission frequency information is used to indicate a transmission frequency of the downlink small data packet.

The above initial downlink BWP is an initial downlink BWP configuration of a primary cell.

The above BCCH configuration information is a configuration related to modifying a passing cycle of the system message.

The above PDCCH configuration information comprises a default paging cycle, a paging frame number and configuration, a number of paging occasions and a first PDCCH monitoring occasion, wherein the default paging cycle is a default paging cycle broadcast in the system message, the paging frame number and configuration is used to derive a total number of paging frames and a paging frame offset, the number of paging occasions is used to indicate a number of paging occasions in each paging frame, the paging occasions are a group of PDCCH monitoring occasions consisting of a plurality of time slots for sending a paging control information, and the first PDCCH monitoring occasion is a first PDCCH monitoring occasion for indicating to monitor a paging occasion of a paging frame.

In some embodiments, the above data transmission apparatus may further comprise: a fourth determining module for determining the default paging cycle as the second time period for sending the paging message.

In some embodiments, the above connection resume request also comprises an uplink small data packet.

The above third sending module 1703 may be specifically used for generating a feedback information for the uplink small data packet and obtaining the downlink small data packet when receiving the connection resume request; and sending the downlink small data packet and the feedback information to the target terminal.

In some embodiments, the above data transmission apparatus may further comprise: a fifth sending module used for sending a second release message to the target terminal when transmission of the downlink small data packet is completed, wherein the second release message comprises an indication information indicating to switch state, such that the target terminal switches the current state to the inactive state or an idle state based on the indication information.

By way of the apparatus provided by the embodiments of the present disclosure, when a target terminal is in the inactive state, if the target terminal receives a paging message comprising a specified paging record of the target terminal itself sent by the target network device, a connection resume request may be sent to the target network device, so as to trigger a small data transmission process between the target terminal and the target network device when the terminal is in the inactive state. At this time, the target network device may send a downlink small data packet to the target terminal based on the received connection resume request, and the target terminal will also receive the downlink small data packet, thereby realizing a downlink small data packet transmission process of a terminal in the inactive state.

Furthermore, compared with the related art in which the terminal in the inactive state has to switch to the connected state for data transmission, in the embodiments of the present disclosure, a new terminal access type, i.e. mobile terminated small data transmission, is introduced through a mobile terminated small data transmission indication in a specified paging record, such that the terminal may receive the downlink small data packet sent by the target network device when the terminal is in the inactive state. The signaling overhead and the delay consumption caused by switching from the inactive state to the connected state are avoided, the transmission efficiency of the downlink small data packet is improved, and the signaling overhead of the downlink small data packet is saved, which effectively reduces the signaling overhead and the delay consumption during the data transmission process.

Based on the same inventive concept, according to the above data transmission method provided by embodiments of the present disclosure, the embodiments of the present disclosure also provide a data transmission system. As shown in Fig. 18, Fig. 18 is a schematic structural view showing a data transmission system provided by embodiments of the present disclosure. The system shown in Fig. 18 comprises a target terminal 1801 and a target network device 1802.

The above target terminal 1801 is used for performing the above method shown in Figs. 1 to 10.

The above target network device 1802 is used for performing the above method shown in Figs. 11 to 14.

By way of the system provided by the embodiments of the present disclosure, when a target terminal is in the inactive state, if the target terminal receives a paging message comprising a specified paging record of the target terminal itself sent by the target network device, a connection resume request may be sent to the target network device, so as to trigger a small data transmission process between the target terminal and the target network device when the terminal is in the inactive state. At this time, the target network device may send a downlink small data packet to the target terminal based on the received connection resume request, and the target terminal will also receive the downlink small data packet, thereby realizing a downlink small data packet transmission process of a terminal in the inactive state.

Furthermore, compared with the related art in which the terminal in the inactive state has to switch to the connected state for data transmission, in the embodiments of the present disclosure, a new terminal access type, i.e. mobile terminated small data transmission, is introduced through a mobile terminated small data transmission indication in a specified paging record, such that the terminal may receive the downlink small data packet sent by the target network device when the terminal is in the inactive state. The signaling overhead and the delay consumption caused by switching from the inactive state to the connected state are avoided, the transmission efficiency of the downlink small data packet is improved, and the signaling overhead of the downlink small data packet is saved, which effectively reduces the signaling overhead and the delay consumption during the data transmission process.

Based on the same inventive concept, according to the above data transmission method provided by the embodiments of the present disclosure, the embodiments of the present disclosure also provide a target terminal. As shown in Fig. 19, the target terminal comprises a processor 1901, a communication interface 1902, a memory 1903 and a communication bus 1904. The processor 1901, the communication interface 1902 and the memory 1903 communicate with each other via the communication bus 1904.

The memory 1903 is used for storing a computer program.

The processor 1901 is used for, when executing the computer program stored in the memory 1903, implementing the following steps: receiving a paging message issued by a target network device according to a first time period when a current state of the target terminal is an inactive state; sending a connection resume request to the target network device when the paging message received comprises a specified paging record of the target terminal, such that the target network device sends a downlink small data packet to the target terminal based on the connection resume request received, wherein the specified paging record comprises a mobile terminated small data transmission indication, and a connection resume reason in the connection resume request is mobile terminated small data transmission; and receiving the downlink small data packet sent by the target network device.

Based on the same inventive concept, according to the above data transmission method provided by the embodiments of the present disclosure, the embodiments of the present disclosure also provide a target network device. As shown in Fig. 20, the target terminal comprises a processor 2001, a communication interface 2002, a memory 2003 and a communication bus 2004. The processor 2001, the communication interface 2002 and the memory 2003 communicate with each other via the communication bus 2004.

The memory 2003 is used for storing a computer program.

The processor 2001 is used for, when executing the computer program stored in the memory 2003, implementing the following steps: issuing a paging message to a target terminal according to a second time period, the target terminal being in a current state which is an inactive state; receiving a connection resume request sent by the target terminal, wherein the connection resume request is sent by the target terminal when receiving the paging message comprising a specified paging record of the target terminal itself, the specified paging record comprises a mobile terminated small data transmission indication, and a connection resume reason in the connection resume request is mobile terminated small data transmission; and sending a downlink small data packet to the target terminal based on the connection resume request, such that the target terminal receives the downlink small data packet.

By way of the target terminal and the target network device provided by the embodiments of the present disclosure, when a target terminal is in the inactive state, if the target terminal receives a paging message comprising a specified paging record of the target terminal itself sent by the target network device, a connection resume request may be sent to the target network device, so as to trigger a small data transmission process between the target terminal and the target network device when the terminal is in the inactive state. At this time, the target network device may send a downlink small data packet to the target terminal based on the received connection resume request, and the target terminal will also receive the downlink small data packet, thereby realizing a downlink small data packet transmission process of a terminal in the inactive state.

Furthermore, compared with the related art in which the terminal in the inactive state has to switch to the connected state for data transmission, in the embodiments of the present disclosure, a new terminal access type, i.e. mobile terminated small data transmission, is introduced through a mobile terminated small data transmission indication in a specified paging record, such that the terminal may receive the downlink small data packet sent by the target network device when the terminal is in the inactive state. The signaling overhead and the delay consumption caused by switching from the inactive state to the connected state are avoided, the transmission efficiency of the downlink small data packet is improved, and the signaling overhead of the downlink small data packet is saved, which effectively reduces the signaling overhead and the delay consumption during the data transmission process.

The communication bus mentioned in the above target terminal and target network device may be a Peripheral Component Interconnect (PCI) bus or an Extended Industry Standard Architecture (EISA) bus or the like. The communication bus may be divided into an address bus, a data bus, a control bus or the like. For the convenience of representation, the bus is only represented by a thick line in the figure, but it does not mean that there is only one bus or one type of bus.

The communication interface is used for communication between the above target terminal and the target network device and other device(s).

The memory may comprise Random Access Memory (RAM) or may also comprise Non-Volatile Memory (NVM), for example, at least one disk memory. In some embodiments, the memory may also be at least one storage device located away from the aforementioned processor.

The above processor may be a general processor comprising a Central Processing Unit (CPU) or a Network Processor (NP); and may also be a Digital Signal Processor (DSP), an Application Specific Integrated Circuit (ASIC), a Field-Programmable Gate Array (FPGA) or other programmable logic device(s), a discrete gate or a transistor logic device, or a discrete hardware component.

Based on the same inventive concept, according to the above data transmission method provided by the embodiments of the present disclosure, the embodiments of the present disclosure also provide a computer-readable storage medium having a computer program stored thereon that, when executed by a processor, implements the steps of the data transmission method of any of the above embodiments.

Based on the same inventive concept, according to the above data transmission method provided by the embodiments of the present disclosure, the embodiments of the disclosure also provide a computer program product containing instructions that, when run on a computer, causes the computer to perform the data transmission method of any of the above embodiments.

The above embodiments may be realized entirely or partly by software, hardware, firmware, or any combination thereof. When implemented in software, it may be implemented entirely or partly in the form of a computer program product. The computer program product comprises one or more computer instructions. When the computer program instructions are loaded and executed on a computer, the processes or functions according to the embodiments of the present disclosure are generated entirely or partly. The computer may be a general-purpose computer, a special-purpose computer, a computer network, or other programmable devices. The computer instructions may be stored in a computer-readable storage medium, or transmitted from one computer-readable storage medium to another computer-readable storage medium. For example, the computer instructions may be transmitted from one website, computer, server or data center to another website, computer, server, or data center in a wired (for example, a coaxial cable, an optical fiber, a digital subscriber line (DSL)) or wireless (for example, infrared, wireless, microwave, or the like) manner. The computer-readable storage medium may be any available medium accessible by a computer or a data storage device such as a server or a data center that contains one or more available medium integrations. The available medium may be a magnetic medium (for example, a floppy disk, a hard disk, a magnetic tape), an optical medium (for example, DVD), or a semiconductor medium (for example, Solid State Disk (SSD)) or the like.

It is to be noted that, the relational terms such as "first" and "second" herein are only used to distinguish one entity or operation from another entity or operation, but do not necessarily require or imply any such actual relationship or sequence present between these entities or operations. Moreover, the term "comprising", "containing" or any other variation thereof is intended to cover non-exclusive inclusions, such that a process, method, item, or device including a series of elements includes not only those elements, but also other elements not explicitly listed or elements inherent to such process, method, item, or device. In a case where there are no more restrictions, an element defined by the phrase "comprising a..." does not exclude that an additional identical element also presents in the process, method, item, or device comprising the element.

Various embodiments in this specification are described in a related manner, and reference may be made to each other for the same and similar parts between various embodiments. Each embodiment focuses on the differences from other embodiments. Especially, for the embodiments such as an apparatus, a system, a target terminal, a target network device, a computer-readable storage medium and a computer program product, since they are substantially similar to the method embodiments, the description is relatively simple, and reference may be made to some description of the method embodiments for the relevant parts.

The above described are only preferred embodiments of the present disclosure and are not intended to limit the protection scope of this disclosure. Any modification, equivalent replacement, improvement, or the like made within the spirit and principle of the present disclosure should be comprised in the protection scope of the present disclosure.

## Claims

1. A data transmission method applied to a target terminal, the data transmission method comprising:
receiving a paging message issued by a target network device according to a first time period when a current state of the target terminal is an inactive state;
sending a connection resume request to the target network device when the paging message received comprises a specified paging record of the target terminal, such that the target network device sends a downlink small data packet to the target terminal based on the connection resume request received, wherein the specified paging record comprises a mobile terminated small data transmission indication, and a connection resume reason in the connection resume request is mobile terminated small data transmission; and
receiving the downlink small data packet sent by the target network device.

2. The data transmission method according to claim 1, wherein the paging message comprises a paging record list which is a list for recording a terminal that is paged, the paging record list comprising at least one paging record.

3. The data transmission method according to claim 2, wherein the paging record comprises at least one of a terminal identity of the terminal that is paged, an access type or the mobile terminated small data transmission indication, wherein:
the terminal identity comprises a non-access stratum (NAS) identity (ID) for core network paging assigned by NAS to the terminal, and a complete inactive state terminal identity for radio access network (RAN) paging;
the access type is used to indicate whether the paging message is a paging message initiated by a protocol data unit (PDU) session that is not accessed by a 3rd generation partnership project (3GPP); and
the mobile terminated small data transmission indication is used to indicate that the paging message is used to trigger mobile terminated small data transmission.

4. The data transmission method according to claim 2, wherein the paging record further comprises a contention free access preamble indicating the terminal to initiate contention free random access.

5. The data transmission method according to claim 3, wherein after receiving the paging message issued by the target network device according to the first time period, the data transmission method further comprises:
parsing each paging record in the paging message received;
for each paging record obtained by parsing:
determining that this paging record is the specified paging record of the target terminal, if the complete inactive state terminal identity in this paging record matches with a complete inactive state terminal identity stored by the target terminal, and this paging record comprises the mobile terminated small data transmission indication, and
determining that this paging record is not the specified paging record of the target terminal, if the complete inactive state terminal identity in this paging record does not match with the complete inactive state terminal identity stored by the terminal,
and/or this paging record does not comprise the mobile terminated small data transmission indication.

6. The data transmission method according to any of claims 1 to 5, wherein if the target terminal stores a configured grant (CG) configuration information, the step of sending a connection resume request to the target network device when the paging message received comprises a specified paging record of the target terminal comprises:
sending the connection resume request to the target network device based on the CG configuration information when the paging message received comprises the specified paging record of the target terminal.

7. The data transmission method according to any of claims 1 to 6, wherein if the target terminal does not store a configured grant (CG) configuration information, the step of sending a connection resume request to the target network device when the paging message received comprises a specified paging record of the target terminal comprises:
sending the connection resume request to the target network device in a contention access manner when the paging message received comprises the specified paging record of the target terminal, and the specified paging record does not comprise a contention free access preamble; and
sending the connection resume request to the target network device in a contention free access manner when the paging message received comprises the specified paging record of the target terminal and the specified paging record comprises the contention free access preamble.

8. The data transmission method according to any of claims 1 to 7, wherein before sending the connection resume request to the target network device, the data transmission method further comprises:
judging whether the target terminal satisfies a preset connection initiating condition at a current moment, wherein the preset connection initiating condition is that the mobile terminated small data transmission indication is received, or the preset connection initiating condition is that the mobile terminated small data transmission indication is received, and a downlink reference signal receiving power (RSRP) is greater than a preset threshold; and
performing the step of sending the connection resume request to the target network device when the target terminal satisfies the preset connection initiating condition.

9. The data transmission method according to any of claims 1 to 8, further comprising:
sending another connection resume request in a case where another preset connection initiating condition is satisfied, such that the target terminal sends an uplink data packet to the target network device after a connection corresponding to the another connection resume request is resumed, wherein the another preset connection initiating condition is data amount of radio bearer configured for mobile originated small data transmission is less than a preset data amount threshold, or the data amount of the radio bearer configured for mobile originated is less than the preset data amount threshold and uplink small data transmission resource is effective.

10. The data transmission method according to claim 8, wherein the preset connection initiating condition is expressed as: the mobile terminated small data transmission indication is received; or the mobile terminated small data transmission indication is received, and a lower layer below a RRC layer indicates that triggering condition of small data transmission is satisfied.

11. The data transmission method according to claim 9, wherein the another preset connection initiating condition is expressed as: an upper layer above a radio resource control (RRC) layer requires resuming RRC connection, SIB1 contains common configuration of small data transmission, small data transmission configuration is configured, all the uplink small data is mapped to radio bearers of the small data transmission configuration, and a lower layer below the RRC layer indicates that triggering condition of small data transmission is satisfied.

12. The data transmission method according to claim 8 or 10, further comprising:
starting a timer for detecting resume process of small data transmission in the inactive state when the target terminal satisfies the preset connection initiating condition; and
starting a timer for monitoring resume process of inactive state and sending a timeout indication to MAC entity when the target terminal does not satisfy the preset connection initiating condition, wherein the timeout indication is used to indicate timeout of a configured grant (CG) timing advance timer in a CG configuration information of small data transmission.

13. The data transmission method according to claim 1, further comprising:
releasing a configured grant (CG) configuration information that is stored if the target terminal moves from a current radio access network (RAN) cell to other RAN cells and initiates a connection resume process in the other RAN cells.

14. The data transmission method according to claim 1, wherein the connection resume request is a first connection resume request or a second connection resume request;
the step of sending a connection resume request to the target network device comprises:
selecting the first connection resume request as the connection resume request when a SIB1 sent by a base station indicates that the connection resume request uses a full resume identifier, or selecting the second connection resume request as the connection resume request when the SIB1 received does not indicate use of the full resume identifier;
resuming a preset security information from an access layer context information that is stored, wherein the preset security information comprises: a radio resource control (RRC) configuration, a robust header compression (ROHC) state, a stored mapping relationship between quality of service (QoS) flow and data resource bearer (DRB), a base station root key and an integrity protection key;
reconstructing a packet data convergence protocol (PDCP) entity for the SIB1;
resuming the SIB1;
for each radio bearer configured for mobile terminated small data transmission, resuming a configuration associated with a primary cell group and radio link layer control protocol (RLC) bearer of PDCP configuration from the access layer context information, and reconstructing a PDCP entity for this radio bearer;
resuming all the radio bearers configured for mobile terminated small data transmission; and
sending the connection resume request to the target network device.

15. The data transmission method according to claim 14, whereinthe first connection resume request and the second connection resume request each comprises: a resume identifier, a resume integrity check code, and the connection resume reason, wherein:
the resume identifier of the first connection resume request is a complete inactive state terminal identity stored by the target terminal, and the resume identifier of the second connection request is a truncated inactive state terminal identity stored by the target terminal, the complete inactive state terminal identity and the truncated inactive state terminal identity are wireless network temporary identifier values of a terminal in the inactive state, and used for a target network side to find an anchor point before the terminal enters the inactive state and the access layer context information stored by the anchor point, and the complete inactive state terminal identity and the truncated inactive state terminal identity have different sizes; and
the resume integrity check code is an identity authentication token for terminal identity authentication at the base station.

16. The data transmission method according to any of claims 1 to 15, wherein when the current state of the target terminal is a connected state, the data transmission method further comprises:
receiving a first release message issued by the target network device, wherein the first release message comprises a suspension configuration information indicating a terminal to perform an inactive state configuration; and
switching the current state to the inactive state based on the suspension configuration information.

17. The data transmission method according to claim 16, wherein the suspension configuration information comprises a complete inactive state terminal identity, a truncated inactive state terminal identity, a radio paging cycle, a radio notification area information, a timer, a next hop chaining count value and a configuration information of mobile terminated small data transmission.

18. The data transmission method according to claim 17, wherein:
the complete inactive state terminal identity and the truncated inactive state terminal identity are wireless network temporary identifier values of a terminal in the inactive state, and are used for a target network side to find an anchor point node before the terminal enters the inactive state and an access layer context information stored by the anchor point node, and the complete inactive state terminal identity and the truncated inactive state terminal identity have different sizes;
the radio paging cycle is a RAN paging cycle configured by a radio access network (RAN) side node for the terminal in the inactive state;
the radio notification area information comprises a cell list and a radio area configuration list, wherein the cell list is a list of cells configured in RAN area, and the radio area configuration list comprises a RAN area code or a random access (RA) code of the RAN area;
the timer is used to trigger a periodic RAN-based notification area update (RNAU) process in the terminal;
the next hop chaining count value is used to calculate a security key after connection is resumed; and
the configuration information of mobile terminated small data transmission comprises at least one of a data resource bearer (DRB) list of small data transmission or a signaling radio bearer 2 (SRB2) indication of small data transmission, wherein the DRB list of small data transmission indicates a DRB identifier of small data transmission configuration, and the SRB2 indication of small data transmission indicates presence or absence of SRB2 of small data transmission configuration of the terminal.

19. The data transmission method according to claim 17, wherein the configuration information of mobile terminated small data transmission further comprises a configured grant (CG) configuration information, wherein the CG configuration grant information comprises a CG SSB RSRP threshold, a CG timing advance timer, a CG timing advance verification configuration and a CG RSRP variation threshold, wherein:
the CG SSB RSRP threshold is a reference signal receiving power (RSRP) threshold selected by SSB performing small data transmission based on CG resource;
the CG timing advance timer is used for timing synchronization of small data transmission;
the CG timing advance verification configuration is used for a configuration of timing advance (TA) verification based on RSRP; and
the CG RSRP variation threshold is a RSRP threshold for TA verification of small data transmission.

20. The data transmission method according to any of claims 16 to 19, wherein the step of switching the current state to the inactive state based on the suspension configuration information comprises:
resetting media access control (MAC) and releasing a default MAC cell group configuration;
applying the suspension configuration information;
determining each DRB in a DRB list of small data transmission and a SRB2 indication of small data transmission as DRB and SRB2 during process of small data transmission when the suspension configuration information comprises a CG configuration information, reconstructing a RLC entity for each radio link layer control protocol (RLC) bearer in target terminal configuration, triggering a packet data convergence protocol (PDCP) entity to perform a session data unit (SDU) discarding process for resumed SRB2 and SRB1, configuring CG resource of small data transmission for a MAC entity, and indicating to start a CG timing advance timer;
storing a current access layer root key (KgNB) and an integrity protection key (KRRCint) of radio resource control (RRC) signaling, a robust header compression (ROHC) state, a stored mapping rule between quality of service (QoS) flow and data resource bearer (DRB), a cell wireless network temporary identifier (C-RNTI) used in a source primary cell (PCell), a cell identifier and a physical cell identifier of the source PCell, a special cell (SpCell) common configuration in a synchronous reconfiguration message of a new radio primary secondary cell (NR PSCell), and all the other configuration parameters than parameters in a synchronization reconfiguration message of the PCell, parameters in the synchronization reconfiguration message of the NR PSCell, mobility control information of a secondary cell group (SCG) of E-UTRA PSCell, a primary secondary cell (PSCell) configuration in EN-DC and a service cell common configuration SIB in an access layer context information of a terminal in the inactive state;
suspending all SRBs except SRB0 and DRBs;
indicating a lower layer of all DRBs to perform PDCP suspension, wherein the lower layer is below a RRC layer; and
switching to the inactive state and performing cell reselection.

21. The data transmission method according to any of claims 1 to 20, further comprising:
receiving a system message broadcast by the target network device, wherein the system message comprises at least one of a downlink transmission frequency information, an initial downlink bandwidth part (BWP), a broadcast control channel (BCCH) configuration information, or a paging channel (PCCH) configuration information.

22. The data transmission method according to claim 21, wherein:
the downlink transmission frequency information is used to indicate a transmission frequency of the downlink small data packet;
the initial downlink BWP is an initial downlink BWP configuration of a primary cell;
the BCCH configuration information is a configuration related to modifying a passing cycle of the system message; and
the PDCCH configuration information comprises a default paging cycle, a paging frame number and configuration, a number of paging occasions and a first physical downlink control channel (PDCCH) monitoring occasion, wherein the default paging cycle is a default paging cycle broadcast in the system message, the paging frame number and configuration is used to derive a total number of paging frames and a paging frame offset, the number of paging occasions is used to indicate a number of paging occasions in each paging frame, the paging occasions are a group of PDCCH monitoring occasions consisting of a plurality of time slots for sending a paging control information, and the first PDCCH monitoring occasion is a first PDCCH monitoring occasion for indicating to monitor a paging occasion of a paging frame.

23. The data transmission method according to claim 22, further comprising:
determining a smaller value of a radio paging cycle and the default paging cycle as the first time period for receiving the paging message when the target terminal is in the inactive state, wherein the radio paging cycle is a RAN paging cycle configured by a wireless access network (RAN) side node for a terminal in the inactive state.

24. The data transmission method according to any of claims 1 to 23, wherein the connection resume request further comprises an uplink small data packet;
the step of receiving a downlink small data packet sent by the target network device comprises:
receiving the downlink small data packet sent by the target network device and a feedback information sent by the target network device for the uplink small data packet.

25. The data transmission method according to any of claims 1 to 24, further comprising:
receiving a second release message sent by the target network device when transmission of the downlink small data packet is completed, wherein the second release message comprises an indication information indicating to switch state; and
switching the current state to the inactive state or an idle state based on the indication information.

26. A data transmission method applied to a target network device, the data transmission method comprising:
issuing a paging message to a target terminal according to a second time period, the target terminal being in a current state which is an inactive state;
receiving a connection resume request sent by the target terminal, wherein the connection resume request is sent by the target terminal when receiving the paging message comprising a specified paging record of the target terminal itself, the specified paging record comprises a mobile terminated small data transmission indication, and a connection resume reason in the connection resume request is mobile terminated small data transmission; and
sending a downlink small data packet to the target terminal based on the connection resume request, such that the target terminal receives the downlink small data packet.

27. The data transmission method according to claim 26, wherein the paging message comprises a paging record list which is a list for recording a terminal that is paged, the paging record list comprising at least one paging record.

28. The data transmission method according to claim 27, wherein the paging record comprises at least one of a terminal identity of the terminal that is paged, an access type or the mobile terminated small data transmission indication, wherein:
the terminal identity comprises a non-access stratum (NAS) identity (ID) for core network paging assigned by NAS to the terminal, and a complete inactive state terminal identity for radio access network (RAN) paging;
the access type is used to indicate whether the paging message is a paging message initiated by a protocol data unit (PDU) session that is not accessed by a 3rd generation partnership project (3GPP); and
the mobile terminated small data transmission indication is used to indicate that the paging message is used to trigger mobile terminated small data transmission.

29. The data transmission method according to claim 27, wherein the paging record further comprises a contention free access preamble indicating the terminal to initiate contention free random access.

30. The data transmission method according to any of claims 26 to 29, wherein the connection resume request is a first connection resume request or a second connection resume request, the first connection resume request is sent by the target terminal when SIB1 sent by a base station indicates that the connection resume request uses a full resume identifier, and the second connection resume request is sent by the target terminal when the SIB1 sent by the base station does not indicate that the connection resume request uses a full resume identifier.

31. The data transmission method according to claim 30, wherein the first connection resume request and the second connection resume request each comprises: a resume identifier, a resume integrity check code, and the connection resume reason, wherein:
the resume identifier of the first connection resume request is a complete inactive state terminal identity stored by the target terminal, and the resume identifier of the second connection request is a truncated inactive state terminal identity stored by the target terminal, the complete inactive state terminal identity and the truncated inactive state terminal identity are wireless network temporary identifier values of a terminal in the inactive state, and used for a target network side to find an anchor point before the terminal enters the inactive state and the access layer context information stored by the anchor point, and the complete inactive state terminal identity and the truncated inactive state terminal identity have different sizes; and
the resume integrity check code is an identity authentication token for terminal identity authentication at the base station.

32. The data transmission method according to any of claims 26 to 31, further comprising:
issuing a first release message to the terminal, wherein the first release message comprises a suspension configuration information indicating a terminal to perform an inactive state configuration, such that the target terminal switches the current state to the inactive state based on the suspension configuration information.

33. The data transmission method according to claim 32, wherein the suspension configuration information comprises a complete inactive state terminal identity, a truncated inactive state terminal identity, a radio paging cycle, a radio notification area information, a timer, a next hop chaining count value and a configuration information of mobile terminated small data transmission.

34. The data transmission method according to claim 33, wherein:
the complete inactive state terminal identity and the truncated inactive state terminal identity are wireless network temporary identifier values of a terminal in the inactive state, and are used for a target network side to find an anchor point node before the terminal enters the inactive state and an access layer context information stored by the anchor point node, and the complete inactive state terminal identity and the truncated inactive state terminal identity have different sizes;
the radio paging cycle is a RAN paging cycle configured by a radio access network (RAN) side node for the terminal in the inactive state;
the radio notification area information comprises a cell list and a radio area configuration list, wherein the cell list is a list of cells configured in RAN area, and the radio area configuration list comprises a RAN area code or a random access (RA) code of the RAN area;
the timer is used to trigger a periodic RAN-based notification area update (RNAU) process in the terminal;
the next hop chaining count value is used to calculate a security key after connection is resumed; and
the configuration information of mobile terminated small data transmission comprises at least one of a data resource bearer (DRB) list of small data transmission in the inactive state or a signaling radio bearer 2 (SRB2) indication of small data transmission, wherein the DRB list of small data transmission in the inactive state indicates a DRB identifier of small data transmission configuration, and the SRB2 indication of small data transmission indicates presence or absence of SRB2 of small data transmission configuration of the terminal.

35. The data transmission method according to claim 34, wherein the configuration information of mobile terminated small data transmission further comprises a configured grant (CG) configuration information, wherein the CG configuration grant information comprises a CG SSB RSRP threshold, a CG timing advance timer, a CG timing advance verification configuration and a CG RSRP variation threshold, wherein:
the CG SSB RSRP threshold is a reference signal receiving power (RSRP) threshold selected by SSB performing small data transmission based on CG resource;
the CG timing advance timer is used for timing synchronization of small data transmission;
the CG timing advance verification configuration is used for a configuration of timing advance (TA) verification based on RSRP; and
the CG RSRP variation threshold is a RSRP threshold for TA verification of small data transmission.

36. The data transmission method according to any of claims 26 to 35, further comprising:
broadcasting a system message, wherein the system message comprises at least one of a downlink transmission frequency information, an initial downlink bandwidth part (BWP), a broadcast control channel (BCCH) configuration information, or a paging channel (PCCH) configuration information.

37. The data transmission method according to claim 36, wherein:
the downlink transmission frequency information is used to indicate a transmission frequency of the downlink small data packet;
the initial downlink BWP is an initial downlink BWP configuration of a primary cell;
the BCCH configuration information is a configuration related to modifying a passing cycle of the system message; and
the PDCCH configuration information comprises a default paging cycle, a paging frame number and configuration, a number of paging occasions and a first physical downlink control channel (PDCCH) monitoring occasion, wherein the default paging cycle is a default paging cycle broadcast in the system message, the paging frame number and configuration is used to derive a total number of paging frames and a paging frame offset, the number of paging occasions is used to indicate a number of paging occasions in each paging frame, the paging occasions are a group of PDCCH monitoring occasions consisting of a plurality of time slots for sending a paging control information, and the first PDCCH monitoring occasion is a first PDCCH monitoring occasion for indicating to monitor a paging occasion of a paging frame.

38. The data transmission method according to claim 37, further comprising:
determining the default paging cycle as the second time period for sending the paging message.

39. The data transmission method according to any of claims 26 to 38, wherein the connection resume request further comprises an uplink small data packet;
the step of sending a downlink small data packet to the target terminal based on the connection resume request comprises:
generating a feedback information for the uplink small data packet and obtaining the downlink small data packet when receiving the connection resume request; and
sending the downlink small data packet and the feedback information to the target terminal.

40. The data transmission method according to any of claims 26 to 39, further comprising:
sending a second release message to the target terminal when transmission of the downlink small data packet is completed, wherein the second release message comprises an indication information indicating to switch state, such that the target terminal switches the current state to the inactive state, or an idle state based on the indication information.

41. A data transmission apparatus applied to a target terminal, the data transmission apparatus comprising:
a first receiving module for receiving a paging message issued by a target network device according to a first time period when a current state of the target terminal is an inactive state;
a first sending module for sending a connection resume request to the target network device when the paging message received comprises a specified paging record of the target terminal, such that the target network device sends a downlink small data packet to the target terminal based on the connection resume request received, wherein the specified paging record comprises a mobile terminated small data transmission indication, and a connection resume reason in the connection resume request is mobile terminated small data transmission; and
a second receiving module for receiving the downlink small data packet sent by the target network device.

42. The data transmission apparatus according to claim 41, wherein the paging message comprises a paging record list which is a list for recording a terminal that is paged, the paging record list comprising at least one paging record.

43. The data transmission apparatus according to claim 42, wherein the paging record comprises at least one of a terminal identity of the terminal that is paged, an access type or the mobile terminated small data transmission indication, wherein:
the terminal identity comprises a non-access stratum (NAS) identity (ID) for core network paging assigned by NAS to the terminal, and a complete inactive state terminal identity for radio access network (RAN) paging;
the access type is used to indicate whether the paging message is a paging message initiated by a protocol data unit (PDU) session that is not accessed by a 3rd generation partnership project (3GPP); and
the mobile terminated small data transmission indication is used to indicate that the paging message is used to trigger mobile terminated small data transmission.

44. The data transmission apparatus according to claim 42, wherein the paging record further comprises a contention free access preamble indicating the terminal to initiate contention free random access.

45. The data transmission apparatus according to claim 43, further comprising:
a parsing module for parsing each paging record in the paging message received after receiving the paging message issued by the target network device according to the first time period;
a first determining module for determining, for each paging record obtained by parsing, that this paging record is the specified paging record of the target terminal, if the complete inactive state terminal identity in this paging record matches with a complete inactive state terminal identity stored by the target terminal, and this paging record comprises the mobile terminated small data transmission indication; and
a second determining module for determining that this paging record is not the specified paging record of the target terminal, if the complete inactive state terminal identity in this paging record does not match with the complete inactive state terminal identity stored by the terminal, and/or this paging record does not comprise the mobile terminated small data transmission indication.

46. The data transmission apparatus according to any of claims 41 to 45, wherein the first sending module is specifically used for, if the target terminal stores a configured grant (CG) configuration information, sending the connection resume request to the target network device based on the CG configuration information when the paging message received comprises the specified paging record of the target terminal.

47. The data transmission apparatus according to any of claims 41 to 46, wherein the first sending module is specifically used for, if the target terminal does not store a configured grant (CG) configuration information, sending the connection resume request to the target network device in a contention access manner when the paging message received comprises the specified paging record of the target terminal, and the specified paging record does not comprise a contention free access preamble; and sending the connection resume request to the target network device in a contention free access manner when the paging message received comprises the specified paging record of the target terminal and the specified paging record comprises the contention free access preamble.

48. The data transmission apparatus according to any of claims 41 to 47, further comprising:
a judging module for judging whether the target terminal satisfies a preset connection initiating condition at a current moment before sending the connection resume request to the target network device, wherein the preset connection initiating condition is that the mobile terminated small data transmission indication is received, or the preset connection initiating condition is that the mobile terminated small data transmission indication is received, and a downlink reference signal receiving power (RSRP) is greater than a preset threshold; and
a performing module for performing the step of sending the connection resume request to the target network device when the target terminal satisfies the preset connection initiating condition.

49. The data transmission apparatus according to any of claims 41 to 48, further comprising:
a performing module for sending another connection resume request in a case where another preset connection initiating condition is satisfied, such that the target terminal sends an uplink data packet to the target network device after a connection corresponding to the another connection resume request is resumed, wherein the another preset connection initiating condition is that data amount of radio bearer configured for mobile originated small data transmission is less than a preset data amount threshold, or the another preset connection initiating condition is that the data amount of the radio bearer configured for mobile originated small data transmission is less than the preset data amount threshold and uplink small data transmission resource is effective.

50. The data transmission apparatus according to claim 48, wherein the preset connection initiating condition is expressed as: the mobile terminated small data transmission indication is received; or the mobile terminated small data transmission indication is received, and a lower layer below a RRC layer indicates that triggering condition of small data transmission is satisfied.

51. The data transmission apparatus according to claim 49, wherein the another preset connection initiating condition is expressed as: an upper layer above a radio resource control (RRC) layer requires resuming RRC connection, SIB1 contains common configuration of small data transmission, small data transmission configuration is configured, all the uplink small data is mapped to radio bearers of the small data transmission configuration, and a lower layer below the RRC layer indicates that triggering condition of small data transmission is satisfied.

52. The data transmission apparatus according to claim 48 or 50, further comprising:
a first starting module for starting a timer for detecting resume process of small data transmission in the inactive state when the target terminal satisfies the preset connection initiating condition; and
a second starting module for starting a timer for monitoring resume process of inactive state and sending a timeout indication to MAC entity when the target terminal does not satisfy the preset connection initiating condition, wherein the timeout indication is used to indicate timeout of a configured grant (CG) timing advance timer in a CG configuration information of small data transmission.

53. The data transmission apparatus according to any of claims 41 to 52, further comprising:
a release module for releasing a configured grant (CG) configuration information that is stored if the target terminal moves from a current radio access network (RAN) cell to other RAN cells and initiates a connection resume process in the other RAN cells.

54. The data transmission apparatus according to any of claims 41 to 53, wherein the connection resume request is a first connection resume request or a second connection resume request, and the first sending module is specifically used for:
selecting the first connection resume request as the connection resume request when a SIB1 sent by a base station indicates that the connection resume request uses a full resume identifier, or selecting the second connection resume request as the connection resume request when the SIB1 received does not indicate use of the full resume identifier;
resuming a preset security information from an access layer context information that is stored, wherein the preset security information comprises: a radio resource control (RRC) configuration, a robust header compression (ROHC) state, a stored mapping relationship between quality of service (QoS) flow and data resource bearer (DRB), a base station root key and an integrity protection key;
reconstructing a packet data convergence protocol (PDCP) entity for the SIB1;
resuming the SIB1;
for each radio bearer configured for mobile terminated small data transmission, resuming a configuration associated with a primary cell group and radio link layer control protocol (RLC) bearer of PDCP configuration from the access layer context information, and reconstructing a PDCP entity for this radio bearer;
resuming all the radio bearers configured for mobile terminated small data transmission; and
sending the connection resume request to the target network device.

55. The data transmission apparatus according to claim 54, wherein the first connection resume request and the second connection resume request each comprises: a resume identifier, a resume integrity check code, and the connection resume reason, wherein:
the resume identifier of the first connection resume request is a complete inactive state terminal identity stored by the target terminal, and the resume identifier of the second connection request is a truncated inactive state terminal identity stored by the target terminal, the complete inactive state terminal identity and the truncated inactive state terminal identity are wireless network temporary identifier values of a terminal in the inactive state, and used for a target network side to find an anchor point before the terminal enters the inactive state and the access layer context information stored by the anchor point, and the complete inactive state terminal identity and the truncated inactive state terminal identity have different sizes; and
the resume integrity check code is an identity authentication token for terminal identity authentication at the base station.

56. The data transmission apparatus according to any of claims 41 to 55, further comprising:
a third receiving module for receiving a first release message issued by the target network device when the current state of the target terminal is a connected state, wherein the first release message comprises a suspension configuration information indicating a terminal to perform an inactive state configuration; and
a first switching module for switching the current state to the inactive state based on the suspension configuration information.

57. The data transmission apparatus according to claim 56, wherein the suspension configuration information comprises a complete inactive state terminal identity, a truncated inactive state terminal identity, a radio paging cycle, a radio notification area information, a timer, a next hop chaining count value and a configuration information of mobile terminated small data transmission.

58. The data transmission apparatus according to claim 57, wherein:
the complete inactive state terminal identity and the truncated inactive state terminal identity are wireless network temporary identifier values of a terminal in the inactive state, and are used for a target network side to find an anchor point node before the terminal enters the inactive state and an access layer context information stored by the anchor point node, and the complete inactive state terminal identity and the truncated inactive state terminal identity have different sizes;
the radio paging cycle is a RAN paging cycle configured by a radio access network (RAN) side node for the terminal in the inactive state;
the radio notification area information comprises a cell list and a radio area configuration list, wherein the cell list is a list of cells configured in RAN area, and the radio area configuration list comprises a RAN area code or a random access (RA) code of the RAN area;
the timer is used to trigger a periodic RAN-based notification area update (RNAU) process in the terminal;
the next hop chaining count value is used to calculate a security key after connection is resumed; and
the configuration information of mobile terminated small data transmission comprises at least one of a data resource bearer (DRB) list of small data transmission in the inactive state or a signaling radio bearer 2 (SRB2) indication of small data transmission, wherein the DRB list of small data transmission in the inactive state indicates a DRB identifier of small data transmission configuration, and the SRB2 indication of small data transmission indicates presence or absence of SRB2 of small data transmission configuration of the terminal.

59. The data transmission apparatus according to claim 57 or 58, wherein the configuration information of mobile terminated small data transmission further comprises a configured grant (CG) configuration information, wherein the CG configuration grant information comprises a CG SSB RSRP threshold, a CG timing advance timer, a CG timing advance verification configuration and a CG RSRP variation threshold, wherein:
the CG SSB RSRP threshold is a reference signal receiving power (RSRP) threshold selected by SSB performing small data transmission based on CG resource;
the CG timing advance timer is used for timing synchronization of small data transmission;
the CG timing advance verification configuration is used for a configuration of timing advance (TA) verification based on RSRP; and
the CG RSRP variation threshold is a RSRP threshold for TA verification of small data transmission.

60. The data transmission apparatus according to any of claims 56 to 59, wherein the first switching module is specifically used for:
resetting media access control (MAC) and releasing a default MAC cell group configuration;
applying the suspension configuration information;
determining each DRB in a DRB list of small data transmission in the inactive state and a SRB2 indication of small data transmission as DRB and SRB2 during process of small data transmission in the inactive state when the suspension configuration information comprises a CG configuration information, reconstructing a RLC entity for each radio link layer control protocol (RLC) bearer in target terminal configuration, triggering a packet data convergence protocol (PDCP) entity to perform a session data unit (SDU) discarding process for resumed SRB2 and SRB1, configuring CG resource of small data transmission for a MAC entity, and indicating to start a CG timing advance timer;
storing a current access layer root key (KgNB) and an integrity protection key (KRRCint) of radio resource control (RRC) signaling, a robust header compression (ROHC) state, a stored mapping rule between quality of service (QoS) flow and data resource bearer (DRB), a cell wireless network temporary identifier (C-RNTI) used in a source primary cell (PCell), a cell identifier and a physical cell identifier of the source PCell, a special cell (SpCell) common configuration in a synchronous reconfiguration message of a new radio primary secondary cell (NR PSCell), and all the other configuration parameters than parameters in a synchronization reconfiguration message of the PCell, parameters in the synchronization reconfiguration message of the NR PSCell, mobility control information of a secondary cell group (SCG) of E-UTRA PSCell, a primary secondary cell (PSCell) configuration in EN-DC and a service cell common configuration SIB in an access layer context information of a terminal in the inactive state;
suspending all SRBs except SRB0 and DRBs;
indicating a lower layer of all DRBs to perform PDCP suspension, wherein the lower layer is below a RRC layer; and
switching to the inactive state and performing cell reselection.

61. The data transmission apparatus according to any of claims 41 to 60, further comprising:
a fourth receiving module for receiving a system message broadcast by the target network device, wherein the system message comprises at least one of a downlink transmission frequency information, an initial downlink bandwidth part (BWP), a broadcast control channel (BCCH) configuration information, or a paging channel (PCCH) configuration information.

62. The data transmission apparatus according to claim 61, wherein:
the downlink transmission frequency information is used to indicate a transmission frequency of the downlink small data packet;
the initial downlink BWP is an initial downlink BWP configuration of a primary cell;
the BCCH configuration information is a configuration related to modifying a passing cycle of the system message; and
the PDCCH configuration information comprises a default paging cycle, a paging frame number and configuration, a number of paging occasions and a first physical downlink control channel (PDCCH) monitoring occasion, wherein the default paging cycle is a default paging cycle broadcast in the system message, the paging frame number and configuration is used to derive a total number of paging frames and a paging frame offset, the number of paging occasions is used to indicate a number of paging occasions in each paging frame, the paging occasions are a group of PDCCH monitoring occasions consisting of a plurality of time slots for sending a paging control information, and the first PDCCH monitoring occasion is a first PDCCH monitoring occasion for indicating to monitor a paging occasion of a paging frame.

63. The data transmission apparatus according to claim 62, further comprising:
a third determining module for determining a smaller value of a radio paging cycle and the default paging cycle as the first time period for receiving the paging message when the target terminal is in the inactive state, wherein the radio paging cycle is a RAN paging cycle configured by a wireless access network (RAN) side node for a terminal in the inactive state.

64. The data transmission apparatus according to any of claims 41 to 63, wherein the connection resume request further comprises an uplink small data packet; and
the second receiving module is specifically used for receiving the downlink small data packet sent by the target network device and a feedback information sent by the target network device for the uplink small data packet.

65. The data transmission apparatus according to any of claims 41 to 64, further comprising:
a fifth receiving module for receiving a second release message sent by the target network device when transmission of the downlink small data packet is completed, wherein the second release message comprises an indication information indicating to switch state; and
a second switching module for switching the current state to the inactive state or an idle state based on the indication information.

66. A data transmission apparatus applied to a target network device, the data transmission apparatus comprising:
a second sending module for issuing a paging message to a target terminal according to a second time period, the target terminal being in a current state which is an inactive state;
a sixth receiving module for receiving a connection resume request sent by the target terminal, wherein the connection resume request is sent by the target terminal when receiving the paging message comprising a specified paging record of the target terminal itself, the specified paging record comprises a mobile terminated small data transmission indication, and a connection resume reason in the connection resume request is mobile terminated small data transmission; and
a third sending module for sending a downlink small data packet to the target terminal based on the connection resume request, such that the target terminal receives the downlink small data packet.

67. The data transmission apparatus according to claim 66, wherein the paging message comprises a paging record list which is a list for recording a terminal that is paged, the paging record list comprising at least one paging record.

68. The data transmission apparatus according to claim 67, wherein the paging record comprises at least one of a terminal identity of the terminal that is paged, an access type or the mobile terminated small data transmission indication, wherein:
the terminal identity comprises a non-access stratum (NAS) identity (ID) for core network paging assigned by NAS to the terminal, and a complete inactive state terminal identity for radio access network (RAN) paging;
the access type is used to indicate whether the paging message is a paging message initiated by a protocol data unit (PDU) session that is not accessed by a 3rd generation partnership project (3GPP); and
the mobile terminated small data transmission indication is used to indicate that the paging message is used to trigger mobile terminated small data transmission.

69. The data transmission apparatus according to claim 67 or 68, wherein the paging record further comprises a contention free access preamble indicating the terminal to initiate contention free random access.

70. The data transmission apparatus according to any of claims 66 to 69, wherein the connection resume request is a first connection resume request or a second connection resume request, the first connection resume request is sent by the target terminal when SIB1 sent by a base station indicates that the connection resume request uses a full resume identifier, and the second connection resume request is sent by the target terminal when the SIB1 sent by the base station does not indicate that the connection resume request uses a full resume identifier.

71. The data transmission apparatus according to claim 70, wherein the first connection resume request and the second connection resume request each comprises: a resume identifier, a resume integrity check code, and the connection resume reason, wherein:
the resume identifier of the first connection resume request is a complete inactive state terminal identity stored by the target terminal, and the resume identifier of the second connection request is a truncated inactive state terminal identity stored by the target terminal, the complete inactive state terminal identity and the truncated inactive state terminal identity are wireless network temporary identifier values of a terminal in the inactive state, and used for a target network side to find an anchor point before the terminal enters the inactive state and the access layer context information stored by the anchor point, and the complete inactive state terminal identity and the truncated inactive state terminal identity have different sizes; and
the resume integrity check code is an identity authentication token for terminal identity authentication at the base station.

72. The data transmission apparatus according to any of claims 66 to 71, further comprising:
a fourth sending module for issuing a first release message to the terminal, wherein the first release message comprises a suspension configuration information indicating the terminal to perform an inactive state configuration, such that the target terminal switches the current state to the inactive state based on the suspension configuration information.

73. The data transmission apparatus according to claim 72, wherein the suspension configuration information comprises a complete inactive state terminal identity, a truncated inactive state terminal identity, a radio paging cycle, a radio notification area information, a timer, a next hop chaining count value and a configuration information of mobile terminated small data transmission.

74. The data transmission apparatus according to claim 73, wherein:
the complete inactive state terminal identity and the truncated inactive state terminal identity are wireless network temporary identifier values of a terminal in the inactive state, and are used for a target network side to find an anchor point node before the terminal enters the inactive state and an access layer context information stored by the anchor point node, and the complete inactive state terminal identity and the truncated inactive state terminal identity have different sizes;
the radio paging cycle is a RAN paging cycle configured by a radio access network (RAN) side node for the terminal in the inactive state;
the radio notification area information comprises a cell list and a radio area configuration list, wherein the cell list is a list of cells configured in RAN area, and the radio area configuration list comprises a RAN area code or a random access (RA) code of the RAN area;
the timer is used to trigger a periodic RAN-based notification area update (RNAU) process in the terminal;
the next hop chaining count value is used to calculate a security key after connection is resumed; and
the configuration information of mobile terminated small data transmission comprises at least one of a data resource bearer (DRB) list of small data transmission in the inactive state or a signaling radio bearer 2 (SRB2) indication of small data transmission, wherein the DRB list of small data transmission in the inactive state indicates a DRB identifier of small data transmission configuration, and the SRB2 indication of small data transmission indicates presence or absence of SRB2 of small data transmission configuration of the terminal.

75. The data transmission apparatus according to claim 74, wherein the configuration information of mobile terminated small data transmission further comprises a configured grant (CG) configuration information, wherein the CG configuration grant information comprises a CG SSB RSRP threshold, a CG timing advance timer, a CG timing advance verification configuration and a CG RSRP variation threshold, wherein:
the CG SSB RSRP threshold is a reference signal receiving power (RSRP) threshold selected by SSB performing small data transmission based on CG resource;
the CG timing advance timer is used for timing synchronization of small data transmission;
the CG timing advance verification configuration is used for a configuration of timing advance (TA) verification based on RSRP; and
the CG RSRP variation threshold is a RSRP threshold for TA verification of small data transmission.

76. The data transmission apparatus according to any of claims 66 to 75, further comprising:
a broadcast module for broadcasting a system message, wherein the system message comprises at least one of a downlink transmission frequency information, an initial downlink bandwidth part (BWP), a broadcast control channel (BCCH) configuration information, or a paging channel (PCCH) configuration information.

77. The data transmission apparatus according to claim 76, wherein:
the downlink transmission frequency information is used to indicate a transmission frequency of the downlink small data packet;
the initial downlink BWP is an initial downlink BWP configuration of a primary cell;
the BCCH configuration information is a configuration related to modifying a passing cycle of the system message; and
the PDCCH configuration information comprises a default paging cycle, a paging frame number and configuration, a number of paging occasions and a first physical downlink control channel (PDCCH) monitoring occasion, wherein the default paging cycle is a default paging cycle broadcast in the system message, the paging frame number and configuration is used to derive a total number of paging frames and a paging frame offset, the number of paging occasions is used to indicate a number of paging occasions in each paging frame, the paging occasions are a group of PDCCH monitoring occasions consisting of a plurality of time slots for sending a paging control information, and the first PDCCH monitoring occasion is a first PDCCH monitoring occasion for indicating to monitor a paging occasion of a paging frame.

78. The data transmission apparatus according to claim 77, further comprising:
a fourth determining module for determining the default paging cycle as the second time period for sending the paging message.

79. The data transmission apparatus according to any of claims 66 to 78, wherein the connection resume request further comprises an uplink small data packet, and the third sending module is specifically used for:
generating a feedback information for the uplink small data packet and obtaining the downlink small data packet when receiving the connection resume request; and
sending the downlink small data packet and the feedback information to the target terminal.

80. The data transmission apparatus according to any of claims 66 to 79, further comprising:
a fifth sending module for sending a second release message to the target terminal when transmission of the downlink small data packet is completed, wherein the second release message comprises an indication information indicating to switch state, such that the target terminal switches the current state to the inactive state, or an idle state based on the indication information.

81. A data transmission system, comprising:
a target terminal for performing the data transmission method according to any of claims 1 to 25; and
a target network device for performing the data transmission method according to any of claims 26 to 40.

82. A target terminal, comprising:
a memory for storing a computer program;
a processor for executing the computer program stored on the memory to implement the data transmission method according to any of claims 1 to 25;
a communication interface; and
a communication bus, wherein the processor, the communication interface and the memory communicate with each other via the communication bus.

83. A target network device, comprising:
a memory for storing a computer program;
a processor for executing the computer program stored on the memory to implement the data transmission method according to any of claims 26 to 40;
a communication interface; and
a communication bus, wherein the processor, the communication interface and the memory communicate with each other via the communication bus.
